(19) Europäisches Patentamt
European Patent Office
Office européen des brevets

(11) Veröffentlichungsnummer: **0 596 899 B1**

(12) **EUROPÄISCHE PATENTSCHRIFT**

(45) Veröffentlichungstag der Patentschrift: **26.04.95**

(51) Int. Cl.6: **A01N 43/54**, A01N 25/32

(21) Anmeldenummer: **92913852.7**

(22) Anmeldetag: **26.06.92**

(86) Internationale Anmeldenummer:
**PCT/EP92/01445**

(87) Internationale Veröffentlichungsnummer:
**WO 93/00010 (07.01.93 93/02)**

Verbunden mit 92110822.1/0521407
(europäische
Anmeldenummer/Veröffentlichungsnummer)
durch Entscheidung vom 05.08.94.

# (54) NEUE MISCHUNGEN AUS HERBIZIDEN UND ANTIDOTS.

(30) Priorität: **29.06.91 DE 4121663**
**20.09.91 DE 4131334**

(43) Veröffentlichungstag der Anmeldung:
**18.05.94 Patentblatt 94/20**

(45) Bekanntmachung des Hinweises auf die Patenterteilung:
**26.04.95 Patentblatt 95/17**

(84) Benannte Vertragsstaaten:
**AT BE CH DE ES FR GB IT LI NL PT**

(73) Patentinhaber: **Hoechst Schering AgrEvo GmbH**
**Gerichtstrasse 27**
**D-13342 Berlin (DE)**

(72) Erfinder: **ZURMÜHLEN, Frank**
**Inselsbergstra e 13**
**D-6230 Frankfurt am Main 80 (DE)**
Erfinder: **LÖHER, Heinz-Josef**
**Ahornweg 14**
**D-6237 Liederbach (DE)**
Erfinder: **SCHLEGEL, Günter**
**Feldbergstra e 18**
**D-6237 Liederbach (DE)**
Erfinder: **SCHÜTZE, Rainer**
**Pfahlgrabenstra e 50**
**D-6270 Idstein (DE)**
Erfinder: **BAUER, Klaus**
**Doorner Stra e 53d**
**D-6450 Hanau 7 (DE)**
Erfinder: **BIERINGER, Hermann**
**Eichenweg 26**
**D-6239 Eppstein (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

**Beschreibung**

Die Erfindung betrifft das technische Gebiet der Pflanzenschutzmittel, insbesondere Wirkstoff-Antidot-Kombinationen, die hervorragend für den Einsatz gegen konkurrierende Schadpflanzen in Nutzpflanzenkulturen geeignet sind.

Einige neuere herbizide Wirkstoffe aus der Gruppe der substituierten Phenyl- oder Pyridyl-pyrimidinyl-(triazinyl)ether zeigen sehr gute Eigenschaften und können in sehr kleinen Aufwandmengen gegen ein breites Spektrum von grasartigen oder breitblättrigen Unkräutern eingesetzt werden.

Sie sind jedoch nicht voll verträglich (selektiv) mit einigen wichtigen Kulturpflanzen, wie Mais oder Getreide, so daß ihrem Einsatz enge Grenzen gesetzt sind. Sie können deshalb manchmal überhaupt nicht oder nur in solch geringen Aufwandmengen eingesetzt werden, daß die erwünschte breite herbizide Wirksamkeit nicht gewährleistet ist. So können beispielsweise viele Herbizide der weiter unten genannten Stoffklasse A) nicht selektiv in Mais oder in Getreide eingesetzt werden.

Ganz unerwartet haben neue experimentelle Arbeiten gezeigt, daß Kulturpflanzen wie Mais oder Weizen und Gerste vor unerwünschten Schäden der oben erwähnten Herbizide geschützt werden können, wenn sie zusammen mit bestimmten Verbindungen ausgebracht werden, die als herbizide Antidots oder Safener wirken.

Gegenstand der Erfindung sind daher herbizide Mittel, welche

A) mindestens einen herbiziden Wirkstoff aus der Gruppe der substituierten Pyrimidine und Triazine der Formel A,

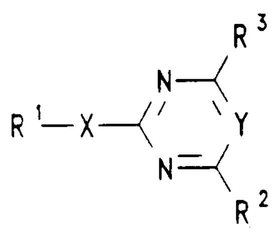

**(A)**

in welcher

X O, S oder $NR^4$ bedeutet,

Y N oder CH bedeutet,

$R^2$ und $R^3$ unabhängig voneinander Wasserstoff, $(C_1-C_4)$-Alkyl, $(C_1-C_4)$-Halogenalkyl, $(C_1-C_4)$-Alkoxy, $(C_1-C_4)$-Halogenalkoxy, $(C_1-C_4)$-Alkylmercapto, $(C_1-C_4)$-Alkylamino oder Di-$(C_1-C_4)$-alkylamino bedeuten,

$R^1$ einen substituierten Aryl- oder Heteroarylrest der Formel

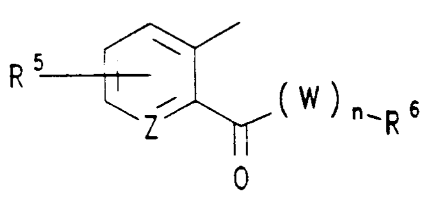

oder

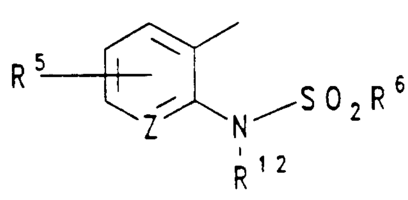

bedeutet,

n 0 oder 1 ist,

W -O-, $-NR^4-$, -S-, $-ON(R^{11})-$ oder $-O-N=C(R^{11})-$ bedeutet,

Z N, N→O oder $CR^4$ bedeutet,

$R^4$, $R^5$ unabhängig voneinander Wasserstoff, Halogen, Cyano, $(C_1-C_4)$-Alkyl,$(C_2-C_4)$-Alkenyl, $(C_2-C_4)$-Alkinyl, $(C_1-C_4)$-Alkoxy, $(C_2-C_4)$-Alkenyloxy, $(C_2-C_4)$-Alkinyloxy, Benzyloxy, 4,6-Di-[$(C_1-C_4)$-alkoxy]-pyrimidin-2-yloxy, $(C_1-C_4)$-Alkylthio, $(C_2-C_4)$-Alkenylthio, $(C_2-C_4)$-Alkinylthio, Benzylthio, $(C_1-C_4)$-Alkylamino, Di-[$(C_1-C_4)$-Alkyl]-amino, $(C_1-C_4)$-Halogenalkyl oder $(C_1-C_4)$-Halogenalkoxy bedeuten,

$R^6$ — Wasserstoff, $(C_1-C_4)$-Alkyl, $(C_2-C_4)$-Alkenyl, $(C_2-C_4)$-Alkinyl, Alkalimetall oder 1 Äquivalent Erdalkalimetall, Alkylammonium, Aryl, $CF_3$ oder $(CHR^{13})_{m'}CHR^7R^8$ mit m' = 0 oder 1 bedeutet,

$R^7$ und $R^{13}$ — unabhängig voneinander Wasserstoff, $(C_1-C_4)$-Alkyl oder $(C_1-C_4)$-Alkoxy bedeuten,

$R^8$ — $(C_1-C_4)$-Alkoxycarbonyl, Cyano, Halogen, Acetyl, Pivaloyl, Benzoyl, $(C_1-C_4)$-Alkoxy, Aryloxy, Halogenacetoxy, Methansulfonyloxy, Hydroxy, $(C_1-C_4)$-Alkylmercapto, $(C_1-C_4)$-Alkylsulfonyl, Arylmercapto, Di-$(C_1-C_4)$-alkylamino, Pyridyl, Aryl oder $CONR^9R^{10}$ bedeutet,

$R^9$ und $R^{10}$ — unabhängig voneinander Wasserstoff, $(C_1-C_4)$-Alkyl, $(C_2-C_4)$-Alkenyl, Aryl oder Benzyl bedeuten,

$R^{11}$ — Wasserstoff oder $(C_1-C_4)$-Alkyl bedeutet oder

$R^6$ und $R^{11}$ — zusammen für Methylen, Ethandiyl oder Propandiyl stehen

$R^{12}$ — Wasserstoff, Alkyl oder Alkoxy bedeutet und

Aryl — Phenyl oder Naphthyl bedeutet, das jeweils unsubstituiert oder ein- oder zweifach substituiert ist durch Reste aus der Gruppe Halogen, $(C_1-C_4)$-Alkyl, $(C_1-C_4)$-Alkoxy, Phenoxy, Nitro und $(C_1-C_4)$-Alkoxycarbonyl,

oder

$R^1$ einen Rest der Formel

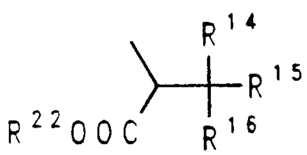

oder

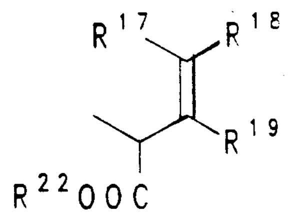

bedeutet,

$R^{14}$ — Wasserstoff, Halogen, Halogen-$(C_1-6_4)$-alkyl, $(C_1-C_4)$-Alkyl, Cycloalkyl, $(C_1-C_4)$-Alkylmercapto-$(C_1-C_4)$-alkyl, Hydroxy-$(C_1-C_4)$-alkyl, Hydroxy, Cyano, Aryloxy-$(C_1-C_4)$-alkyl, Thienyl, Aryl, Dihydronaphthyl oder

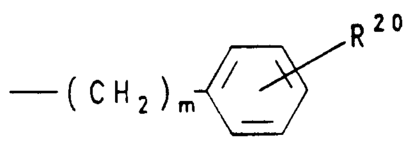

bedeutet, wobei Aryl wie oben definiert ist,

$R^{20}$ — Wasserstoff, Halogen, Nitro, $(C_1-C_4)$-Alkyl, $(C_1-C_4)$-Alkoxy oder $S(O)_pR^{21}$ bedeutet,

$R^{21}$ — Alkyl bedeutet,

p — eine 0, 1 oder 2 ist,

m — eine 0, 1 oder 2 ist,

$R^{15}$ und $R^{16}$ — unabhängig voneinander Wasserstoff oder Alkyl bedeuten, oder diese zusammen mit dem C-Atom für einen 3- ,4- ,5- oder 6-gliedrigen Cycloalkan-Ring stehen, worin eine Methylengruppe durch Sauerstoff ersetzt sein kann und welcher durch eine oder zwei Alkylgruppen substituiert sein kann,

$R^{17}$ und $R^{18}$ — unabhängig voneinander Wasserstoff oder $(C_1-C_4)$-Alkyl bedeuten,

$R^{19}$ — $(C_1-C_4)$-Alkyl oder Phenyl bedeutet, oder

$R^{18}$ und $R^{19}$ — für $-(CH_2)_l-$ stehen mit l = 3 oder 4, welches durch eine oder zwei Alkylgruppen substituiert sein kann,

$R^{22}$ — Wasserstoff, $(C_1-C_4)$-Alkyl, $(C_1-C_4)$-Alkenyl, $(C_1-C_4)$-Alkinyl, Phenyl, $(C_1-C_4)$-Alkylidenamino, $(C_1-C_4)$-Alkoxycarbonyl-$(C_1-C_4)$-alkyl, $(C_1-C_4)$-Alkoxy-$(C_1-C_4)$-alkyl, Halogen-$(C_1-C_4)$-alkyl, Cycloalkyl, nitrosubstituiertes Phenylmercapto-$(C_1-C_4)$-alkyl, Halogen oder Benzyl, das durch $(C_1-C_4)$-Alkyl oder $(C_1-C_4)$-Alkoxy substituiert sein kann, bedeutet, oder

deren Salz,

und

B) mindestens eine Verbindung aus der Gruppe der Verbindungen der Formeln B1 und B2

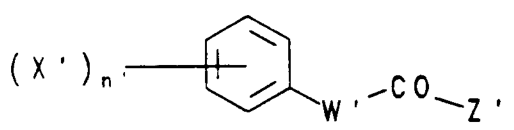

(B1)

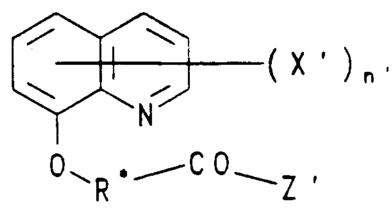

(B2)

in welchen

X' Wasserstoff, Halogen, $(C_1\text{-}C_4)$-Alkyl, $(C_1\text{-}C_4)$-Alkoxy, Nitro oder $(C_1\text{-}C_4)$-Halogenalkyl bedeutet,

Z' $OR^{31}$, $SR^{31}$ oder $NR^{31}R$ bedeutet, oder für einen gesättigten oder ungesättigten 3- bis 7-gliedrigen Heterocyclus mit mindestens einem N-Atom und bis zu 3 Heteroatomen steht, der über das N-Atom mit der Carbonylgruppe verbunden ist und unsubstituiert oder durch Reste aus der Gruppe $(C_1\text{-}C_4)$-Alkyl, $(C_1\text{-}C_4)$-Alkoxy oder gegebenenfalls substituiertes Phenyl substituiert ist, vorzugsweise einen Rest der Formel $OR^{31}$, $NHR^{31}$ oder $N(CH_3)_2$, insbesondere der Formel $OR^{31}$,

R Wasserstoff, $(C_1\text{-}C_6)$-Alkyl, $(C_1\text{-}C_6)$-Alkoxy oder gegebenenfalls substituiertes Phenyl bedeutet,

R* eine ($C_1$ oder $C_2$)-Alkandiylkette bedeutet, die noch mit ein oder zwei $(C_1\text{-}C_4)$-Alkylresten substituiert sein kann, vorzugsweise $-CH_2-$,

$R^{31}$ Wasserstoff, $(C_1\text{-}C_{18})$-Alkyl, $(C_3\text{-}C_{12})$-Cycloalkyl, $(C_2\text{-}C_8)$-Alkenyl oder $(C_2\text{-}C_8)$-Alkinyl bedeutet,

wobei die vorstehenden C-haltigen Reste unsubstituiert oder ein- oder mehrfach, vorzugsweise bis zu dreifach, durch gleiche oder verschiedene Reste aus der Gruppe enthaltend Halogen, Hydroxy, $(C_1\text{-}C_8)$-Alkoxy, $(C_1\text{-}C_8)$-Alkylmercapto, $(C_2\text{-}C_8)$-Alkenylmercapto. $(C_2\text{-}C_8)$-Alkinylmercapto, $(C_2\text{-}C_8)$-Alkenyloxy, $(C_2\text{-}C_8)$-Alkinyloxy, $(C_3\text{-}C_7)$-Cycloalkyl, $(C_3\text{-}C_7)$-Cycloalkoxy, Cyano, Mono- und Di-$(C_1\text{-}C_4$-alkyl)-amino, $(C_1\text{-}C_8)$-Alkoxycarbonyl, $(C_2\text{-}C_8)$-Alkenyloxycarbonyl, $(C_1\text{-}C_8)$-Alkylmercaptocarbonyl, $(C_2\text{-}C_8)$-Alkinyloxycarbonyl, $(C_1\text{-}C_8)$-Alkylcarbonyl, $(C_2\text{-}C_8)$-Alkenylcarbonyl, $(C_2\text{-}C_8)$-Alkinylcarbonyl, 1-(Hydroxyimino)-$(C_1\text{-}C_6)$-alkyl, 1-[$(C_1\text{-}C_4)$-Alkylimino]-$(C_1\text{-}C_4)$-alkyl, 1-[$(C_1\text{-}C_4)$-Alkoxyimino]-$(C_1\text{-}C_6)$-alkyl, $(C_1\text{-}C_8)$-Alkylcarbonylamino, $(C_2\text{-}C_8)$-Alkenylcarbonylamino, $(C_2\text{-}C_8)$-Alkinylcarbonylamino, Aminocarbonyl, $(C_1\text{-}C_8)$-Alkylaminocarbonyl, Di-$(C_1\text{-}C_6)$ -alkylaminocarbonyl, $(C_2\text{-}C_6)$-Alkenylaminocarbonyl, $(C_2\text{-}C_6)$-Alkinylaminocarbonyl, $(C_1\text{-}C_8)$-Alkoxycarbonylamino, $(C_1\text{-}C_8)$-Alkylaminocarbonylamino, $(C_1\text{-}C_6)$-Alkylcarbonyloxy, das unsubstituiert oder durch Halogen, Nitro, $(C_1\text{-}C_4)$-Alkoxy oder gegebenenfalls substituiertes Phenyl substituiert ist, $(C_2\text{-}C_6)$-Alkenylcarbonyloxy, $(C_2\text{-}C_6)$-Alkinylcarbonyloxy, $(C_1\text{-}C_8)$-Alkylsulfonyl, Phenyl, Phenyl-$(C_1\text{-}C_6)$-alkoxy, Phenyl-$(C_1\text{-}C_6)$-alkoxycarbonyl, Phenoxy, Phenoxy-$(C_1\text{-}C_6)$-alkoxy, Phenoxy-$(C_1\text{-}C_6)$-alkoxycarbonyl, Phenylcarbonyloxy, Phenylcarbonylamino, Phenyl-$(C_1\text{-}C_6)$-alkylcarbonylamino, wobei die letztgenannten 9 Reste im Phenylring unsubstituiert oder ein- oder mehrfach, vorzugsweise bis zu dreifach durch gleiche oder verschiedene Reste aus der Gruppe Halogen, $(C_1\text{-}C_4)$-Alkyl, $(C_1\text{-}C_4)$-Alkoxy, $(C_1\text{-}C_4)$-Halogenalkyl, $(C_1\text{-}C_4)$-Halogenalkoxy und Nitro substituiert sind, und Reste der Formeln $-SiR'_3$, $-O-SiR'_3$, $R'_3Si$-$(C_1\text{-}C_8)$-Alkoxy, $-CO-O-NR'_2$, $-O-N=CR'_2$, $-N=CR'_2$, $-O-NR'_2$, $CH(OR')_2$ und $-O-(CH_2)_m-CH(OR')_2$, worin die R' in den genannten Formeln unabhängig voneinander Wasserstoff, $(C_1\text{-}C_4)$-Alkyl, Phenyl, das unsubstituiert oder ein- oder mehrfach, vorzugsweise bis zu dreifach durch gleiche oder verschiedene Reste aus der Gruppe Halogen, $(C_1\text{-}C_4)$-Alkyl, $(C_1\text{-}C_4)$-Alkoxy, $(C_1\text{-}C_4)$-Halogenalkyl, $(C_1\text{-}C_4)$-Halogenalkoxy und Nitro substituiert ist, oder paarweise eine $(C_2\text{-}C_6)$-Alkandiylkette und m = 0 bis 6 bedeuten, und einen substituierten Alkoxyrest der Formel $R''O\text{-}CHR'''(OR'')$-$(C_1\text{-}C_6)$-alkoxy, worin die R'' unabhängig voneinander $(C_1\text{-}C_4)$-Alkyl oder zusammen einen $(C_1\text{-}C_6)$-Alkandiyl und R''' Wasserstoff oder $(C_1\text{-}C_4)$-Alkyl bedeuten, substituiert sind,

n' eine ganze Zahl von 1 bis 5, vorzugsweise 1 bis 3 ist,

W' ein divalenter heterocyclischer Rest einer der Formeln W1 bis W4 bedeutet,

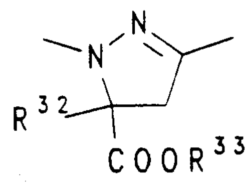

(W1)

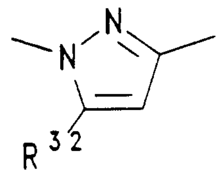

(W2)

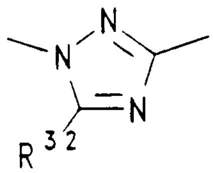

(W3)

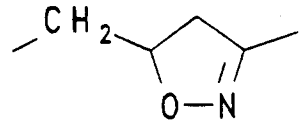

(W4)

$R^{32}$ Wasserstoff, $(C_1-C_8)$-Alkyl, $(C_1-C_8)$-Halogenalkyl, $(C_3-C_{12})$-Cycloalkyl oder gegebenenfalls substituiertes Phenyl bedeutet und

$R^{33}$ Wasserstoff, $(C_1-C_6)$-Alkyl, $(C_1-C_8)$-Halogenalkyl, $(C_1-C_4)$-Alkoxy-$(C_1-C_4)$-alkyl, $(C_1-C_6)$-Hydroxyalkyl, $(C_3-C_{12})$-Cycloalkyl oder Tri-$(C_1-C_4)$-alkyl-silyl bedeutet,

enthalten.

Von besonderem Interesse sind herbizide Mittel, in welchen in Formel A

X ein Sauerstoffatom bedeutet,

Y N oder CH, vorzugsweise CH, bedeutet,

$R^2$, $R^3$ unabhängig voneinander $(C_1-C_4)$-Alkyl, $(C_1-C_4)$-Alkoxy oder $(C_1-C_4)$-Haloalkoxy, vorzugsweise Methyl oder Methoxy, bedeuten,

$R^4$, $R^5$ unabhängig voneinander Wasserstoff, Halogen, Cyano, $(C_1-C_4)$-Alkyl, $(C_1-C_4)$-Alkoxy, $(C_1-C_4)$-Haloalkyl oder $(C_1-C_4)$-Haloalkoxy, vorzugsweise $R^4$ Wasserstoff, Halogen, $(C_1-C_2)$-Alkyl, $(C_1-C_2)$-Alkoxy, $(C_1-C_2)$-Haloalkyl oder $(C_1-C_2)$-Haloalkoxy und $R^5$ Wasserstoff bedeuten oder

$-CR^{14}R^{15}R^{16}$ Isopropyl, t-Butyl oder Cyclopentyl bedeutet, oder

sofern die genannten allgemeinen Reste gemeinsam in einer Verbindung der Formel A enthalten sind, auch solche Verbindungen der Formel A, in der eine Kombination der bevorzugt genannten Reste enthalten ist.

Von besonderem Interesse sind auch herbizide Mittel,

in welchen in Formel B1

$R^{31}$ Wasserstoff, $(C_1-C_8)$-Alkyl oder $(C_3-C_7)$-Cycloalkyl bedeutet, wobei die vorstehenden C-haltigen Reste unsubstituiert sind oder ein- oder mehrfach durch Halogen oder ein- oder zweifach, vorzugsweise bis zu einfach substituiert sind durch Reste aus der Gruppe Hydroxy, $(C_1-C_4)$-Alkoxy, $(C_1-C_4)$-Alkoxycarbonyl, $(C_2-C_6)$-Alkenyloxycarbonyl, $(C_2-C_6)$-Alkinyloxycarbonyl, 1-(Hydroxyimino)-$(C_1-C_4)$-alkyl, 1-[$(C_1-C_4)$-Alkylimino]-$(C_1-C_4)$-alkyl, 1-[$(C_1-C_4)$-Alkoxyimino]-$(C_1-C_4)$-alkyl und Reste der Formeln $-SiR'_3$, $-O-N=CR'_2$, $-N=CR'_2$ und $-O-NR'_2$, worin die R' in den genannten Formeln unabhängig voneinander Wasserstoff oder $(C_1-C_4)$-Alkyl oder paarweise eine $(C_4-C_5)$-Alkandiylkette bedeuten,

$R^{32}$ Wasserstoff, $(C_1-C_8)$-Alkyl, $(C_1-C_6)$-Halogenalkyl, $(C_3-C_7)$-Cycloalkyl oder Phenyl bedeutet und

$R^{33}$ Wasserstoff, $(C_1-C_8)$-Alkyl, $(C_1-C_8)$-Halogenalkyl, $(C_1-C_4$-Alkoxy$)$-$(C_1-C_4)$-alkyl, $(C_1-C_6)$-Hydroxyalkyl, $(C_3-C_7)$-Cycloalkyl oder Tri-$(C_1-C_4)$-alkylsilyl bedeutet,

sowie herbizide Mittel,

in welchen

X' Wasserstoff, Halogen, Methyl, Ethyl, Methoxy, Ethoxy, ($C_1$ oder $C_2$)-Halogenalkyl, vorzugsweise Wasserstoff, Halogen oder ($C_1$ oder $C_2$)-Halogenalkyl bedeutet.

Bevorzugt sind herbizide Mittel,

in welchen in Formel B1

X' Wasserstoff, Halogen, Nitro oder $(C_1-C_4)$-Halogenalkyl bedeutet,

n' 1, 2 oder 3 ist,

Z' einen Rest der Formel $OR^{31}$ bedeutet,

$R^{31}$ Wasserstoff, ($C_1$-$C_8$)-Alkyl oder ($C_3$-$C_7$)-Cycloalkyl bedeutet, wobei die vorstehenden C-haltigen Reste unsubstituiert sind oder ein- oder mehrfach, vorzugsweise bis zu dreifach durch gleiche oder verschiedene Halogen-Reste oder bis zu zweifach, vorzugsweise unsubstituiert oder einfach, durch gleiche oder verschiedene Reste aus der Gruppe Hydroxy, ($C_1$-$C_4$)-Alkoxy, ($C_1$-$C_4$)-Alkoxycarbonyl, ($C_2$-$C_6$)-Alkenyloxycarbonyl, ($C_2$-$C_6$)-Alkinyloxycarbonyl, 1-(Hydroxyimino)-($C_1$-$C_4$)-alkyl, 1-[($C_1$-$C_4$)-Alkylimino]-($C_1$-$C_4$)-alkyl, 1-[($C_1$-$C_4$)-Alkoxyimino]-($C_1$-$C_4$)-alkyl und der Reste der Formeln - $SiR'_3$, -O-N =$CR'_2$, -N=$CR'_2$ und -O-$NR'_2$ substituiert sind, worin die Reste R' in den genannten Formeln unabhängig voneinander Wasserstoff oder ($C_1$-$C_4$)-Alkyl bedeuten oder diese paarweise für ($C_4$ oder $C_5$)-Alkandiyl stehen,

$R^{32}$ Wasserstoff, ($C_1$-$C_8$)-Alkyl, ($C_1$-$C_6$)-Halogenalkyl, ($C_3$-$C_7$)-Cycloalkyl oder Phenyl bedeutet und

$R^{33}$ Wasserstoff, ($C_1$-$C_8$)-Alkyl, ($C_1$-$C_8$)-Halogenalkyl, ($C_1$-$C_4$)-Alkoxy-($C_1$-$C_4$)-alkyl, ($C_1$-$C_6$)-Hydroxyalkyl, ($C_3$-$C_7$)-Cycloalkyl oder Tri-($C_1$-$C_4$)-alkylsilyl bedeutet.

Bevorzugt sind auch herbizide Mittel,
in welchen in Formel B2

X' Wasserstoff, Halogen oder ($C_1$-$C_4$)-Halogenalkyl bedeutet,

n 1, 2 oder 3 ist, wobei $(X')_n$ vorzugsweise 5-Cl ist,

Z' einen Rest der Formel $OR^{31}$ bedeutet,

R* $CH_2$ bedeutet und

$R^{31}$ Wasserstoff, ($C_1$-$C_8$)-Alkyl, ($C_1$-$C_8$)-Halogenalkyl oder ($C_1$-$C_4$)-Alkoxy-($C_1$-$C_4$)-alkyl, 1-(Hydroxyimino)-($C_1$-$C_4$)-alkyl, 1-[($C_1$-$C_4$)Alkylimino]-($C_1$-$C_4$)-alkyl, 1-[($C_1$-$C_4$)-Alkoxyimino]-($C_1$-$C_4$)-alkyl, vorzugsweise ($C_1$-$C_8$)-Alkyl bedeutet.

Besonders bevorzugt sind herbizide Mittel,
in welchen in Formel B1

W' W1 bedeutet,

X' Wasserstoff, Halogen oder ($C_1$-$C_2$)-Halogenalkyl bedeutet,

n' 1, 2 oder 3 ist, wobei $(X')_n$ vorzugsweise 2,4-$Cl_2$ ist,

Z' einen Rest der Formel $OR^{31}$ bedeutet,

$R^{31}$ Wasserstoff, ($C_1$-$C_8$)-Alkyl, ($C_1$-$C_4$)-Halogenalkyl, ($C_1$-$C_4$)-Hydroxyalkyl, ($C_3$-$C_7$)-Cycloalkyl, ($C_1$-$C_4$)-Alkoxy-($C_1$-$C_4$)-alkyl, Tri-($C_1$-$C_2$)-alkylsilyl, vorzugsweise ($C_1$-$C_4$)-Alkyl bedeutet,

$R^{32}$ Wasserstoff, ($C_1$-$C_8$)-Alkyl, ($C_1$-$C_4$)-Halogenalkyl oder ($C_3$-$C_7$)-Cycloalkyl, vorzugsweise Wasserstoff oder ($C_1$-$C_4$)-Alkyl bedeutet und

$R^{33}$ Wasserstoff, ($C_1$-$C_8$)-Alkyl, ($C_1$-$C_4$)-Halogenalkyl, ($C_1$-$C_4$)-Hydroxyalkyl, ($C_3$-$C_7$)-Cycloalkyl, ($C_1$-$C_4$)-Alkoxy-($C_1$-$C_4$)-alkyl oder Tri-($C_1$-$C_2$)-alkylsilyl, vorzugsweise Wasserstoff oder ($C_1$-$C_4$)-Alkyl bedeutet.

Besonders bevorzugt sind auch herbizide Mittel,
in welchen in Formel B1

W' W2 bedeutet,

X' Wasserstoff, Halogen oder ($C_1$-$C_2$)-Halogenalkyl bedeutet.

n' 1, 2 oder 3 ist, wobei $(X')_n$ vorzugsweise 2,4-$Cl_2$ ist,

Z' einen Rest der Formel $OR^{31}$ bedeutet,

$R^{31}$ Wasserstoff, ($C_1$-$C_8$)-Alkyl, ($C_1$-$C_4$)-Halogenalkyl, ($C_1$-$C_4$)-Hydroxyalkyl, ($C_3$-$C_7$)-Cycloalkyl, ($C_1$-$C_4$-Alkoxy)-$C_1$-$C_4$-alkyl, Tri-($C_1$-$C_2$)-alkyl-silyl, vorzugsweise ($C_1$-$C_4$)-Alkyl bedeutet und

$R^{32}$ Wasserstoff, ($C_1$-$C_8$)-Alkyl, ($C_1$-$C_4$)-Halogenalkyl, ($C_3$-$C_7$)-Cycloalkyl oder Phenyl, vorzugsweise Wasserstoff oder ($C_1$-$C_4$)-Alkyl bedeutet.

Besonders bevorzugt sind auch herbizide Mittel,
in welchen in Formel B1

W' W3 bedeutet,

X' Wasserstoff, Halogen oder ($C_1$-$C_2$)-Halogenalkyl bedeutet,

n' 1, 2 oder 3 ist, wobei $(X')_n$ vorzugsweise 2,4-$Cl_2$ ist,

Z' einen Rest der Formel $OR^{31}$ bedeutet,

$R^{31}$ Wasserstoff, ($C_1$-$C_8$)-Alkyl, ($C_1$-$C_4$)-Halogenalkyl, ($C_1$-$C_4$)-Hydroxyalkyl, ($C_3$-$C_7$)-Cycloalkyl, ($C_1$-$C_4$)-Alkoxy-($C_1$-$C_4$)-alkyl, Tri-($C_1$-$C_2$)-alkylsilyl, vorzugsweise ($C_1$-$C_4$)-Alkyl bedeutet und

$R^{32}$ ($C_1$-$C_8$)-Alkyl oder ($C_1$-$C_4$)-Halogenalkyl, vorzugsweise $C_1$-Halogenalkyl bedeutet.

Besonders bevorzugt sind auch herbizide Mittel,
in welchen in Formel B1

W' W4 bedeutet,

X' Wasserstoff, Halogen, Nitro, ($C_1$-$C_4$)-Alkyl oder ($C_1$-$C_2$)-Halogenalkyl, vorzugsweise $CF_3$, oder ($C_1$-$C_4$)-Alkoxy bedeutet,

n' 1, 2 oder 3 ist,

Z' einen Rest der Formel $OR^{31}$ bedeutet,

$R^{31}$ Wasserstoff, $(C_1\text{-}C_4)$-Alkyl, oder $(C_1\text{-}C_4)$-Alkoxycarbonyl-$(C_1\text{-}C_4)$-alkyl, vorzugsweise $(C_1\text{-}C_4)$-Alkoxy-CO-$CH_2$-, $(C_1\text{-}C_4)$-Alkoxy)-CO-$C(CH_3)H$-, HO-CO-$CH_2$- oder HO-CO-$C(CH_3)H$- bedeutet.

Sofern es im einzelnen nicht anders definiert wird, gelten für die Reste in den Formeln A, B1 und B2 die folgenden Definitionen:
Alkyl, Alkenyl und Alkinyl sind geradkettig oder verzweigt und haben bis zu 8, vorzugsweise bis zu 4 C-Atome; entsprechendes gilt für den aliphatischen Teil substituierter Alkyl-, Alkenyl- und Alkinylreste oder davon abgeleitete Reste wie Halogenalkyl, Hydroxyalkyl, Alkoxycarbonyl, Alkoxy, Alkanoyl, Halogenalkoxy usw.

Alkyl steht z. B. für Methyl, Ethyl, n- und Isopropyl, n-, Iso-, tert.- und 2-Butyl. Pentyle, Hexyle, wie n-Hexyl, Isohexyl und 1,3-Dimethylbutyl, Heptyle, wie n-Heptyl, 1-Methylhexyl und 1,4-Dimethylpentyl. Alkenyl bedeutet z. B. Allyl, 1-Methylprop-2-en-1-yl, But-2-en-1-yl, But-3-en-1-yl 1-Methyl-but-3-en-1-yl und 1-Methyl-but-2-en-1-yl. Alkinyl bedeutet z. B. Propargyl, But-2-in-1-yl, But-3-in-1-yl, 1-Methyl-but-3-in.

Cycloalkyl hat vorzugsweise 3 bis 8 C-Atome und steht z.B. für Cyclobutyl, Cyclopentyl, Cyclohexyl oder Cycloheptyl. Cycloalkyl kann gegebenenfalls bis zu zwei $(C_1\text{-}C_4)$-Alkylreste als Substituenten tragen.

Halogen bedeutet Fluor, Chlor, Brom oder Iod, vorzugsweise Fluor, Chlor oder Brom, insbesondere Fluor oder Chlor. Halogenalkyl, -alkenyl und -alkinyl bedeuten durch Halogen mono-, di- oder polysubstituiertes Alkyl, Alkenyl bzw. Alkinyl, wie $CF_3$, $CHF_2$, $CH_2F$, $CF_3CF_2$, $CH_2FCHCl$, $CCl_3$, $CHC1_2$ oder $CH_2CH_2Cl$. Halogenalkoxy ist z. B. $OCF_3$, $OCHF_2$, $OCH_2F$, $CF_3CF_2O$, $CF_3CH_2O$.

Aryl weist 6 bis 12 C-Atome auf und ist z.B. Phenyl, Naphthyl oder Biphenylyl, vorzugsweise aber Phenyl. Entsprechendes gilt für davon abgeleitete Reste, wie Aryloxy, Aroyl oder Aryloxyalkyl. Gegebenenfalls substituiertes Phenyl ist z.B. Phenyl, das unsubstituiert ist oder ein, zwei oder drei gleiche oder verschiedene Substituenten aus der Gruppe Halogen, $(C_1\text{-}C_4)$-Alkyl, $(C_1\text{-}C_4)$-Alkoxy, $(C_1\text{-}C_4)$-Halogenalkyl, $(C_1\text{-}C_4)$-Halogenalkoxy und Nitro trägt, wie o-, m- und p-Tolyl, Dimethylphenyle, 2-, 3- und 4-Chlorphenyl, 2-, 3- und 4-Trifluor- und -Trichlorphenyl. 2,4-, 3,5-, 2,5- und 2,3-Dichlorphenyl oder o-, m- und p-Methoxyphenyl.

Die Verbindungen der Formeln B1 sind aus EP-A-333 131 (ZA-89/1960), EP-A-269 806 (US-A-4,891,057), EP-A-346 620 (AU-A-89/34951) und den internationalen Patentanmeldungen PCT/EP 90/01966 (WO-91/08202) und PCT/EP 90/02020 (WO-91/07874) und dort zitierter Literatur bekannt oder können nach oder analog den dort beschriebenen Verfahren hergestellt werden. Die Verbindungen der Formel B2 sind aus EP-A-94 349 (US-A-4,902,340) und EP-A-191 736 (US-A-4,881,966) und dort zitierter Literatur bekannt oder können nach oder analog den dort beschriebenen Verfahren hergestellt werden. Einige Verbindungen sind ferner in der deutschen Patentanmeldung P 40 41 121.4 beschrieben.

Als herbizide Wirkstoffe eignen sich erfindungsgemäß solche Pyrimidin- bzw. Triazinderivate der Formel A, die allein nicht oder nicht optimal in Getreidekulturen und/oder Mais eingesetzt werden können, weil sie die Kulturpflanzen zu stark schädigen.

Die Verbindungen der Formel A sind aus EP-A-372 329, EP-A-363 040, EP-330 990, JP 88-118929, EP-A-335 409, EP-A-249 707 und EP-A-347 811 und dort zitierter Literatur bekannt oder können nach analogen Verfahren hergestellt werden.

Folgende Gruppen von Verbindungen haben sich als Safener für die oben erwähnten herbizide Wirkstoffe bewährt:

a) Verbindungen vom Typ der Dichlorphenylpyrazolin-3-carbonsäure (d.h. der Formel B1, worin W' = W1 und $(X')_n$ = 2,4-$Cl_2$), vorzugsweise Verbindungen wie 1-(2,4-Dichlorphenyl)-5-(ethoxycarbonyl)-5-methyl-2-pyrazolin-3-carbonsäureethylester (B1-1), und verwandte Verbindungen, wie sie in der internationalen Anmeldung PCT/EP 90/02020 beschrieben sind,

b) Derivate der Dichlorphenylpyrazolcarbonsäure (d.h. der Formel B1, worin W' = W2 und $(X')_n$ = 2,4-$Cl_2$), vorzugsweise Verbindungen wie 1-(2,4-Dichlorphenyl)-5-methyl-pyrazol-3-carbonsäureethylester (B1-2), 1-(2,4-Dichlorphenyl)-5-isopropyl-pyrazol-3-carbonsäureethylester (B1-3), 1-(2,4-Dichlorphenyl)-5-(1,1-dimethyl-ethyl)pyrazol-3-carbonsäureethylester (B1-4), 1-(2,4-Dichlorphenyl)-5-phenyl-pyrazol-3-carbonsäureethylester (B1-5) und verwandte Verbindungen, wie sie in EP-A-333 131 und EP-A-269 806 beschrieben sind.

c) Verbindungen vom Typ der Triazolcarbonsäuren (d. h. der Formel B1, worin W' = W3 und $(X')_n$ = 2,4-$Cl_2$), vorzugsweise Verbindungen wie 1-(2,4-Dichlorphenyl)-5-trichlormethyl-(1H)-1,2,4-triazol-3-carbonsäureethylester (B1-6, Fenchlorazol) und verwandte Verbindungen (siehe EP-A-174 562 und EP-A-346 620);

d) Verbindungen des Typs Dichlorbenzyl-2-isoxazolin-3-carbonsäure (d. h. der Formel B1, worin W' = W4 und $(X')_n$ = 2,4-$Cl_2$), vorzugsweise Verbindungen wie 5-(2,4-Dichlorbenzyl)-2-isoxazolin-3-carbonsäureethylester (B1-7) und verwandte Verbindungen, wie sie in der internationalen Anmeldung PCT/EP 90/01966 beschrieben sind.

e) Verbindungen vom Typ der 8-Chinolinoxyessigsäure, z.B. solche der Formel B2, worin $(X')_n$ = 5-Cl, Wasserstoff, Z' = $OR^{31}$, R* = $CH_2$), vorzugsweise Verbindungen wie (5-Chlor-8-chinolinoxy)-essigsäure-(1-methyl-hex-1-yl)-ester (B2-1), (5-Chlor-8-chinolinoxy)-essigsäure-(1,3-dimethyl-but-1-yl)-ester (B2-2), (5-Chlor-8-chinolinoxy)-essigsäure-4-allyl-oxy-butylester (B2-3), (5-Chlor-8-chinolinoxy)-essigsäure-1-allyloxy-prop-2-ylester (B2-4), (Chinolin-8-oxy)-essigsäureethylester (B2-5), (5-Chlor-8-chinolinoxy)-essigsäuremethylester (B2-6), (5-Chlor-8-chinolinoxy)-essigsäureallylester (B2-7), (5-Chlor-8-chinolinoxy)-essigsäure-2-(2-propylideniminoxy)-1-ethylester (B2-8), (5-Chlor-8-chinolinoxy)-essigsäure-2-oxo-prop-1-ylester (B2-9)

und verwandte Verbindungen, wie sie in EP-A-86 750, EP-A-94 349 und EP-A-191 736 beschrieben oder in der deutschen Patentanmeldung P 40 41 121.4 vorgeschlagen worden sind.

Die Safener (Antidote) der vorstehenden Gruppen a) bis e) reduzieren oder unterbinden phytotoxische Effekte, die beim Einsatz der herbiziden Wirkstoffe der Formel A in Nutzpflanzenkulturen auftreten können, ohne die Wirksamkeit dieser herbiziden Wirkstoffe gegen Schadpflanzen zu beeinträchtigen. Hierdurch kann das Einsatzgebiet herkömmlicher Pflanzenschutzmittel ganz erheblich erweitert und z. B. auf Kulturen wie Weizen, Gerste, Mais und andere Gramineen-Kulturen ausgedehnt werden, in denen bisher ein Einsatz der Herbizide nicht möglich oder nur beschränkt, das heißt, in niedrigen Dosierungen mit wenig Breitenwirkung möglich war.

Die herbiziden Wirkstoffe und die erwähnten Safener können zusammen (als fertige Formulierung oder im Tank-mix-Verfahren) oder in beliebiger Reihenfolge nacheinander ausgebracht werden. Das Gewichtsverhältnis Safener: herbizider Wirkstoff kann innerhalb weiter Grenzen variieren und ist vorzugsweise im Bereich von 1:10 bis 10:1, insbesondere von 1:10 bis 5:1. Die jeweils optimalen Mengen an herbizidem Wirkstoff und Safener sind vom Typ des verwendeten herbiziden Wirkstoffs oder vom verwendeten Safener sowie von der Art des zu behandelnden Pflanzenbestandes abhängig und lassen sich von Fall zu Fall durch entsprechende Vorversuche ermitteln.

Haupteinsatzgebiete für die Anwendung der Safener sind vor allem Mais und Getreidekulturen (Weizen, Roggen, Gerste, Hafer), Reis, Sorghum, aber auch Baumwolle und Sojabohne, vorzugsweise Getreide und Mais.

Die Safener der Formel B1 und B2 können je nach ihren Eigenschaften zur Vorbehandlung Saatgutes der Kulturplanze (Beizung der Samen) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.

Die benötigten Aufwandmengen der Safener können je nach Indikation und verwendetem herbiziden Wirkstoff innerhalb weiter Grenzen schwanken und sind in der Regel im Bereich von 0,001 bis 5 kg, vorzugsweise 0,005 bis 0,5 kg Wirkstoff je Hektar.

Gegenstand der vorliegenden Erfindung ist deshalb auch ein Verfahren zum Schutz von Kulturpflanzen vor phytotoxischen Nebenwirkungen von Herbiziden, das dadurch gekennzeichnet ist, daß eine wirksame Menge einer Verbindung der Formel B1 und/oder B2 vor, nach oder gleichzeitig mit dem herbiziden Wirkstoff der Formel A auf die ganzen Pflanzensamen oder die Anbaufläche appliziert wird.

Die Verbindungen der Formel B1 und B2 und deren Kombinationen mit einem oder mehreren der genannten herbiziden Wirkstoffe können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), emulgierbare Konzentrate (EG), wasserlösliche Pulver (SP), wasserlösliche Konzentrate (SL), konzentrierte Emulsionen (BW) wie Öl-in-Wasser und Wasser-in-Öl-Emulsionen, versprühbare Lösungen oder Emulsionen, Kapselsuspensionen (CS), Dispersionen auf Öl- oder Wasserbasis (SC), Suspoemulsionen, Suspensionskonzentrate, Stäubemittel (DP), ölmischbare Lösungen (ÖL), Beizmittel, Granulate (GR) in Form von Mikro-, Sprüh-, Aufzugs- und Adsorptionsgranulaten, Granulate für die Boden- bzw. Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und werden beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v.Olphen "Intruduction to Clay Colloid Chemistry", 2nd Ed., J. Wiley & Sons, N.Y., Marsden "Solvents Guide, 2nd Ed., Interscience, N.Y. 1963; McCutcheon's "Detergents and Emulsifiers Annual", MG Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler "Chemische Technolgie", Band 7, C. Hauser Verlag München, 4. Aufl. 1986.

Auf der Basis dieser Formulierungen lassen sich auch Kombinationen mit anderen pestizid wirksamen Stoffen, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxethylierte Alkylphenole, polyoxethylierte Fettalkohole und Fettamine, Fettalkoholpolyglykolethersulfate, Alkansulfonate oder Alkylarylsulfonate, ligninsulfonsaures Natrium, 2,2,-dinaphthylmethan-6,6'-disulfonsaures Natrium, diburylnaphthalinsulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte (z.B. Blockpolymere), Alkylpolyether, Sorbitanfettsäureester, Polyoxyethylensorbitanfettsäureester oder andere Polyoxethylensorbitanester.

Stäubemittel erhält man durch Vermahlen des Wirkstoffes mit fein verteilten festen Stoffen, z. B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z. B. Polyvinylalkohol, polyacrylsaurem Natrium oder auch Mineralölen, auf die Oberfläche von Trägerstoffen wie Sand, Kaolinite oder von granuliertem Inertmaterial. Wasserdispergierbare Granulate werden in der Regel nach den üblichen Verfahren wie Sprühtrocknung, Wirbelbettgranulierung, Tellergranulierung, Mischung mit Hochgeschwindigkeitsmischern und Extrusion ohne festes Inertmaterial hergestellt. Auch können geeignete Wirkstoffe in der für die Herstellung von Düngemittelgranulaten üblichen Weise - gewünschtenfalls in Mischung mit Düngemitteln - granuliert werden.

Die agrochemischen Zubereitungen enthalten in der Regel 0,1 bis 99 Gew.-%, insbesondere 0,1 bis 95 Gew.-%, Wirkstoffe der Formel B1 und/oder B2 oder des Herbizid/Antidot-Wirkstoffgemischs A und B1 und/oder B2 und 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-% eines Tensides.

In Spritzpulvern beträgt die Wirkstoffkonzentration z.B. etwa 10 bis 90 Gew.%, der Rest zu 100 Gew.-% besteht aus üblichen Formulierungsbestandteilen. Bei emulgierbaren Konzentraten beträgt die Wirkstoffkonzentration etwa 1 bis 80 Gew.-%. Staubförmige Formulierungen enthalten etwa 1 bis 20 Gew.-% an Wirkstoffen, versprühbare Lösungen etwa 0,2 bis 20 Gew.-% Wirkstoffe. Bei Granulaten wie wasserdispergierbaren Granulaten hängt der Wirkstoffgehalt zum Teil davon ab, ob die wirksame Verbindung flüssig oder fest vorliegt. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Granulate sowie versprühbare Lösungen werden vor der Anwendung üblicherweise nicht mehr mit weiteren inerten Stoffen verdünnt. Besonders gute Wirksamkeiten der erfindungsgemäßen Mittel können erzielt werden, wenn zusätzlich zu den in den Formulierungen enthaltenen Tensiden weitere Netzmittel in Konzentrationen von 0,1 bis 0,5 Gew.-% im Tank-mix-Verfahren zugesetzt werden, z.B. nichtionische Netzmittel oder Netzmittel vom Typ der Fettalkoholpolyolethersulfate (siehe z. B. deutsche Patentanmeldung P P 40 29 304.1). Mit den äußeren Bedingungen wie Temperatur, Feuchtigkeit, der Art des verwendeten Herbizids u.a. variiert die erforderliche Aufwandmenge der Safener.

Folgende Beispiele dienen zur Erläuterung der Erfindung:

A. Formulierungsbeispiele

a) Ein Staubmittel wird erhalten, indem man 10 Gew.-Teile einer Verbindung der Formel B1 und/oder B2 oder eines Wirkstoffgemischs aus einem herbiziden Wirkstoff der Formel A und einem Safener der Formel B1 und/oder B2 und 90 Gew.-Teile Talkum als Inertstoff mischt und in einer Schlagmühle zerkleinert.

b) Ein in Wasser leicht dispergierbares, benetzbares Pulver wird erhalten, indem man 25 Gewichtsteile einer Verbindung der Formel B1 und/oder B2 oder eines Wirkstoffgemischs aus einem herbiziden Wirkstoff der Formel A und einem Safener der Formel B1 und/oder B2, 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gewichtsteile einer Verbindung der Formel B1 und/oder B2 oder eines Wirkstoffgemischs aus einem herbiziden Wirkstoff der Formel A und einem Safener der Formel B1 und/oder B2, 6 Gew.-Teilen Alkylphenolpolyglykolether (®Triton X 207), 3 Gew.-Teilen Isotridecanolpolyglykolether (8 EO) und 71 Gew.- Teilen paraffinischem Mineralöl (Siedebereich z.B. ca. 255 bis über 277 ° C) mischt und in einer Reibkugelmühle auf eine Feinheit von unter 5 Mikron vermahlt.

d) Ein emulgierbares Konzentrat wird erhalten aus 15 Gew.-Teilen einer Verbindung der Formel B1 und/oder B2 oder eines Wirkstoffgemischs aus einem herbiziden Wirkstoff der Formel A und einem Safener der Formel B1 und/oder B2, 75 Gew.Teilen Cyclohexanon als Lösemittel und 10 Gew.-Teilen oxethyliertes Nonylphenol als Emulgator.

e) Ein in Wasser dispergierbares Granulat wird erhalten, indem man
75 Gew.-Teile einer Verbindung der Formel B1 und/oder B2 oder eines Wirkstoffgemischs aus einem herbiziden Wirkstoff der Formel A und einem Safener der Formel B1 und/oder B2,
10 Gew.-Teile ligninsulfonsaures Calcium,
5 Gew.-Teile Natriumlaurylsulfat,
3 Gew.-Teile Polyvinylalkohol und
7 Gew.-Teile Kaolin
mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man
25 Gew.-Teile einer Verbindung der Formel B1 und/oder B2 oder eines Wirkstoffgemischs aus einem herbiziden Wirkstoff der Formel A und einem Safener der Formel B1 und/oder B2,
5 Gew.-Teile 2,2'-dinaphthylmethan-6,6'-disulfonsaures Natrium,
2 Gew.-Teile oleoylmethyltaurinsaures Natrium,
1 Gew.-Teile Polyvinylalkohol,
17 Gew.-Teile Calciumcarbonat und
50 Gew.-Teile Wasser
auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

B. Biologische Beispiele

Die Kulturpflanzen, Unkräuter und Ungräser wurden im Gewächshaus in Plastiktöpfen bis zum 4-Blattstadium herangezogen und dann erfindungsgemäß mit Verbindungen der Formel A und B1 und/oder B2 im Nachauflaufverfahren behandelt. Die Verbindungen der Formel A und B1 und/oder B2 wurden dabei in Form wäßriger Suspensionen bzw. Emulsionen mit einer Wasseraufwandmenge von umgerechnet 300 l/ha ausgebracht. 4 Wochen nach der Behandlung wurden die Pflanzen visuell auf jede Art von Schädigung durch die ausgebrachten Herbizide bonitiert, wobei insbesondere das Ausmaß der anhaltenden Wachstumshemmung berücksichtigt wurde. Die Bewertung erfolgte in Prozentwerten im Vergleich zu unbehandelten Kontrollen.

Die Ergebnisse der folgenden Tabellen veranschaulichen, daß die erfindungsgemäßen eingesetzten Verbindungen der Formel B1 bzw. B2 starke Herbizidschäden an Kulturpflanzen, hervorgerufen durch Verbindungen der Formel A, effektiv reduzieren können. Selbst bei starken Überdosierungen der Herbizide werden bei den Kulturpflanzen auftretende schwere Schädigungen deutlich reduziert und geringere Schäden völlig aufgehoben.

Mischungen aus herbiziden Wirkstoffen der Formel A und Verbindungen der Formel B1 und/oder B2 eignen sich deshalb in ausgezeichneter Weise zur selektiven Unkrautbekämpfung in Kulturen wie Getreide und Mais.

Beispiel 1: Herbizide Wirkung und Safenerwirkung

| | | % Schädigung an Kulturpflanzen und Unkräutern | | |
|---|---|---|---|---|
| | Dosis g AS/ha | Mais | AMRE | ECCG |
| H1 | 400 | 55 | -- | -- |
| | 200 | 40 | -- | -- |
| | 100 | 20 | 100 | 100 |
| | 50 | 1 | 100 | 100 |
| H1 + B2-2 | 400 + 200 | 10 | -- | -- |
| | 200 + 100 | 0 | -- | -- |
| | 100 + 50 | 0 | 100 | 100 |
| | 50 + 25 | 0 | 100 | 100 |
| H1 + B2-3 | 400 + 200 | 0 | -- | -- |
| | 200 + 100 | 0 | -- | -- |
| | 100 + 50 | 0 | 100 | 100 |
| | 50 + 25 | 0 | 100 | 100 |
| H1 + B1-1 | 400 + 200 | 25 | -- | -- |
| | 200 + 100 | 5 | -- | -- |
| | 100 + 50 | 0 | 100 | 100 |
| | 50 + 25 | 0 | 100 | 100 |
| H1 + B2-4 | 400 + 200 | 5 | -- | -- |
| | 200 + 100 | 0 | -- | -- |
| | 100 + 50 | 0 | 100 | 100 |
| | 50 + 25 | 0 | 100 | 100 |

Abkürzungen zur Tabelle in Beispiel 1:

H1 = 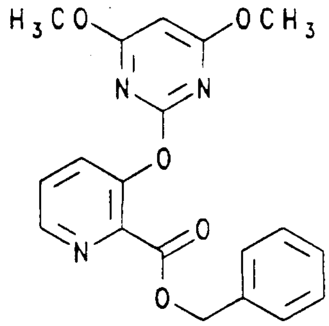

Chemischer Name:
2-(2-Benzyloxycarbonyl-pyrid-3-yloxy)-4,6-dimethoxy-pyrimidin

B1-1 = 1-(2,4-Dichlorphenyl)-5-(ethoxycarbonyl)-5-methyl-2-pyrazolin-3-carbonsäure-ethylester

B2-2 = (5-Chlor-8-chinolinoxy)-essigsäure-(1,3-dimethylbut-1-yl)-ester,

B2-3 = (5-Chlor-8-chinolinoxy)-essigsäure-4-allyloxybutylester,

B2-4 = (5-Chlor-8-chinolinoxy)-essigsäure-1-allyloxyprop-2-ylester,

AMRE = Amaranthus retroflexus
ECCG = Echinochloa crus galli
AS = Aktivsubstanz (bezogen auf reinen Wirkstoff)

Beispiel 2: Reduzierung der Phytotox durch verschiedene Antidots

| | Dosis in g AS/ha | % Schädigung an Mais |
|---|---|---|
| H1 | 400<br>200<br>100 | 55<br>40<br>20 |
| H1 + B2-5 | 400 + 200<br>200 + 100<br>100 + 50 | 15<br>0<br>0 |
| H1 + B2-6 | 400 + 200<br>200 + 100<br>100 + 50 | 10<br>0<br>0 |
| H1 + B2-1 | 400 + 200<br>200 + 100<br>100 + 50 | 10<br>0<br>0 |
| H1 + B1-3 | 400 + 200<br>200 + 100<br>100 + 50 | 5<br>0<br>0 |
| H1 + B1-7 | 400 + 200<br>200 + 100<br>100 + 50 | 15<br>0<br>0 |
| H1 + B2-7 | 400 + 200<br>200 + 100<br>100 + 50 | 10<br>5<br>0 |
| H1 + B2-8 | 400 + 200<br>200 + 100<br>100 + 50 | 10<br>0<br>0 |

| | Dosis in g AS/ha | % Schädigung an Mais |
|---|---|---|
| H1 + B2-9 | 400 + 200 | 15 |
| | 200 + 100 | 5 |
| | 100 + 50 | 0 |
| H2 | 100 | 70 |
| | 50 | 50 |
| | 25 | 35 |
| | 12 | 20 |
| H3 | 50 | 70 |
| | 25 | 40 |
| | 12 | 20 |
| H4 | 100 | 80 |
| | 50 | 45 |
| | 25 | 20 |
| | 12 | 5 |
| H5 | 50 | 40 |
| | 25 | 30 |
| | 12 | 20 |
| H2 + B2-6 | 100 + 100 | 25 |
| | 50 + 50 | 5 |
| | 25 + 25 | 0 |
| | 12 + 12 | 0 |
| H3 + B2-8 | 50 + 50 | 20 |
| | 25 + 25 | 0 |
| | 12 + 12 | 0 |

| | Dosis in g AS/ha | % Schädigung an Mais |
|---|---|---|
| H4 + B2-4 | 100 + 100 | 35 |
| | 50 + 50 | 5 |
| | 25 + 25 | 0 |
| | 12 + 12 | 0 |
| H5 + B2-2 | 50 + 50 | 5 |
| | 25 + 25 | 0 |
| | 12 + 12 | 0 |

Abkürzungen zur Tabelle in Beispiel 2:

H1 = s. Tabelle zu biologischem Beispiel 1

H2 = 2-(2-Methoxycarbonyl-pyrid-3-yloxy)-4,6-dimethoxy-pyrimidin,

H3 = 2-(2-Carboxyphenoxy)-4,6-dimethoxy-pyrimidin,

H4 = 2-(2-Methoxycarbonyl-phenoxy)-4,6-dimethoxy-pyrimidin,

H5 = 2-(1-Carboxy-2-methyl-propoxy)-4,6-dimethoxy-pyrimidin

B1-3 = 1-(2,4-Dichlorphenyl)-5-isopropyl-pyrazol-3-carbonsäureethylester

B1-7 = 5-(2,4-Dichlorbenzyl)-2-isoxazolin-3-carbonsäureethylester,

B2-1 = (5-Chlor-8-chinolinoxy)-essigsäure-1-methyl-hex-1-ylester,

B2-2 = siehe Tabelle zu biologischem Beispiel 1

B2-4 = siehe Tabelle zu biologischem Beispiel 1

B2-5 = (8-Chinolinoxy)-essigsäure-ethylester

B2-6 = (5-Chlor-8-chinolinoxy)-essigsäure-methylester

B2-7 = (5-Chlor-8-chinolinoxy)-essigsäure-allylester

B2-8 = (5-Chlor-8-chinolinoxy)-essigsäure-2-(2-propyliden-iminoxy)-1-ethylester

B2-9 = (5-Chlor-8-chinolinoxy)-essigsäure-2-oxo-prop-1-ylester

## Patentansprüche

1. Herbizides Mittel, welches

A) mindestens einen herbiziden Wirkstoff aus der Gruppe der substituierten Pyrimidine und Triazine der Formel A

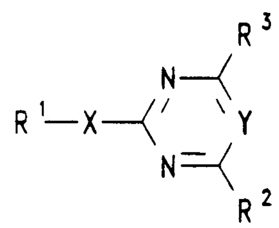

(A)

in welcher

| | |
|---|---|
| X | O, S oder $NR^4$ bedeutet, |
| Y | N oder CH bedeutet, |
| $R^2$ und $R^3$ | unabhängig voneinander Wasserstoff, $(C_1\text{-}C_4)$-Alkyl, $(C_1\text{-}C_4)$-Halogenalkyl, $(C_1\text{-}C_4)$-Alkoxy, $(C_1\text{-}C_4)$-Halogenalkoxy, $(C_1\text{-}C_4)$-Alkylmercapto, $(C_1\text{-}C_4)$-Alkylamino oder Di-$(C_1\text{-}C_4)$-alkylamino bedeuten, |
| $R^1$ | einen substituierten Aryl- oder Heteroarylrest der Formel |

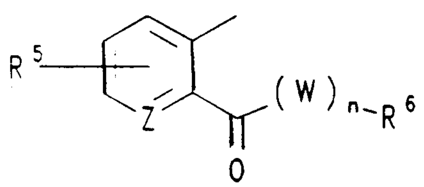

oder

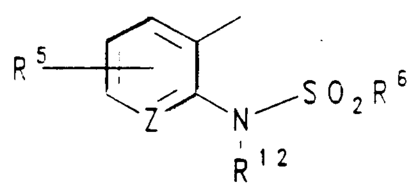

| | |
|---|---|
| | bedeutet, |
| n | 0 oder 1 ist, |
| W | -O-, $-NR^4$-, -S-, $-ON(R^{11})$- oder $-O-N=C(R^{11})$- bedeutet, |
| Z | N, N→O oder $CR^4$ bedeutet, |
| $R^4$, $R^5$ | unabhängig voneinander Wasserstoff, Halogen, Cyano, $(C_1\text{-}C_4)$-Alkyl,$(C_2\text{-}C_4)$-Alkenyl, $(C_2\text{-}C_4)$-Alkinyl, $(C_1\text{-}C_4)$-Alkoxy, $(C_2\text{-}C_4)$-Alkenyloxy, $(C_2\text{-}C_4)$-Alkinyloxy, Benzyloxy, 4,6-Di-[$(C_1\text{-}C_4)$-alkoxy]-pyrimidin-2-yloxy, $(C_1\text{-}C_4)$-Alkylthio, $(C_2\text{-}C_4)$-Alkenylthio, $(C_2\text{-}C_4)$-Alkinylthio, Benzylthio, $(C_1\text{-}C_4)$-Alkylamino, Di-[$(C_1\text{-}C_4$-Alkyl]-amino, $(C_1\text{-}C_4)$Halogenalkyl oder $(C_1\text{-}C_4)$-Halogenalkoxy bedeuten, |
| $R^6$ | Wasserstoff, $(C_1\text{-}C_4)$-Alkyl, $(C_2\text{-}C_4)$-Alkenyl, $(C_2\text{-}C_4)$-Alkinyl, Alkalimetall oder 1 Äquivalent Erdalkalimetall, Alkylammonium, Aryl, $CF_3$ oder $(CHR^{13})_{m'}CHR^7R^8$ mit m' = 0 oder 1 bedeutet, |
| $R^7$ und $R^{13}$ | unabhängig voneinander Wasserstoff, $(C_1\text{-}C_4)$-Alkyl oder $(C_1\text{-}C_4)$-Alkoxy bedeuten, |
| $R^8$ | $(C_1\text{-}C_4)$-Alkoxycarbonyl, Cyano, Halogen, Acetyl, Pivaloyl, Benzoyl, $(C_1\text{-}C_4)$-Alkoxy, Aryloxy, Halogenacetoxy, Methansulfonyloxy, Hydroxy, $(C_1\text{-}C_4)$-Alkylmercapto, $(C_1\text{-}C_4)$-Alkylsulfonyl, Arylmercapto, Di-$(C_1\text{-}C_4)$-alkylamino, Pyridyl, Aryl oder $CONR^9R^{10}$ bedeutet, |
| $R^9$ und $R^{10}$ | unabhängig voneinander Wasserstoff, $(C_1\text{-}C_4)$-Alkyl, $(C_2\text{-}C_4)$-Alkenyl, Aryl oder Benzyl, |
| $R^{11}$ | Wasserstoff oder $(C_1\text{-}C_4)$-Alkyl bedeutet oder |
| $R^6$ und $R^{11}$ | zusammen für Methylen, Ethandiyl oder Propandiyl stehen, |
| $R^{12}$ | Wasserstoff, Alkyl oder Alkoxy bedeutet und |
| Aryl | Phenyl oder Naphthyl bedeutet, das jeweils unsubstituiert oder ein- oder zweifach substituiert ist durch Reste aus der Gruppe Halogen, $(C_1\text{-}C_4)$-Alkyl, $(C_1\text{-}C_4)$-Alkoxy, Phenoxy, Nitro und $(C_1\text{-}C_4)$-Alkoxycarbonyl, |

oder

$R^1$ einen Rest der Formel

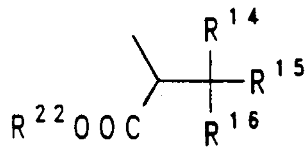

oder

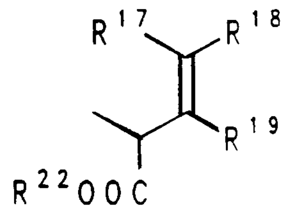

bedeutet,

- $R^{14}$ Wasserstoff, Halogen, Halogen-($C_1$-$C_4$)-alkyl, ($C_1$-$C_4$)-Alkyl, Cycloalkyl, ($C_1$-$C_4$)-Alkylmercapto-($C_1$-$C_4$)-alkyl, Hydroxy-($C_1$-$C_4$)-alkyl, Hydroxy, Cyano, Aryloxy-($C_1$-$C_4$)-alkyl, Thienyl, Aryl, Dihydronaphthyl oder

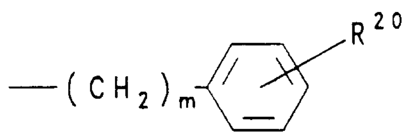

bedeutet, wobei Aryl wie oben definiert ist,

- $R^{20}$ Wasserstoff, Halogen, Nitro, ($C_1$-$C_4$)-Alkyl, ($C_1$-$C_4$)-Alkoxy oder $S(O)_pR^{21}$ bedeutet,
- $R^{21}$ Alkyl bedeutet,
- p eine 0, 1 oder 2 ist,
- m eine 0, 1 oder 2 ist,
- $R^{15}$ und $R^{16}$ unabhängig voneinander Wasserstoff oder Alkyl bedeuten, oder diese zusammen mit dem C-Atom für einen 3- ,4- ,5- oder 6-gliedrigen Cycloalkan-Ring stehen, worin eine Methylengruppe durch Sauerstoff ersetzt sein kann und welcher durch eine oder zwei Alkylgruppen substituiert sein kann,
- $R^{17}$ und $R^{18}$ unabhängig voneinander Wasserstoff oder ($C_1$-$C_4$)-Alkyl bedeuten,
- $R^{19}$ ($C_1$-$C_4$)-Alkyl oder Phenyl bedeutet, oder
- $R^{18}$ und $R^{19}$ für $-(CH_2)_l-$ stehen mit $l = 3$ oder 4, welches durch eine oder zwei Alkylgruppen substituiert sein kann,
- $R^{22}$ Wasserstoff, ($C_1$-$C_4$)-Alkyl, ($C_1$-$C_4$)-Alkenyl, ($C_1$-$C_4$)-Alkinyl, Phenyl, ($C_1$-$C_4$)-Alkylidenamino, ($C_1$-$C_4$)-Alkoxycarbonyl-($C_1$-$C_4$)-alkyl, ($C_1$-$C_4$)-Alkoxy-($C_1$-$C_4$)-alkyl, Halogen-($C_1$-$C_4$)-alkyl, Cycloalkyl, nitrosubstituiertes Phenylmercapto-($C_1$-$C_4$)-alkyl, Halogen oder Benzyl, das durch ($C_1$-$C_4$)-Alkyl oder ($C_1$-$C_4$)-Alkoxy substituiert sein kann, bedeutet, oder

deren Satz,

und

B) mindestens eine Verbindung aus der Gruppe der Verbindungen der Formeln B1 und B2

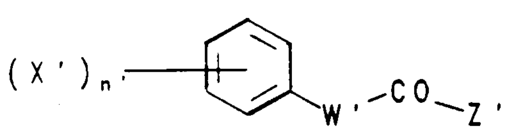

(B1)

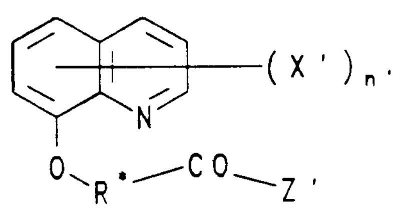

(B2)

in welchen

- X' Wasserstoff, Halogen, ($C_1$-$C_4$)-Alkyl, ($C_1$-$C_4$)-Alkoxy, Nitro oder ($C_1$-$C_4$)-Halogenalkyl bedeutet,

Z' $OR^{31}$, $SR^{31}$ oder $NR^{31}R$ bedeutet, oder für einen gesättigten oder ungesättigten 3- bis 7-gliedrigen Heterocyclus mit mindestens einem N-Atom und bis zu 3 Heteroatomen steht, der über das N-Atom mit der Carbonylgruppe verbunden ist und unsubstituiert oder durch Reste aus der Gruppe ($C_1$-$C_4$)-Alkyl, ($C_1$-$C_4$)-Alkoxy oder gegebenenfalls substituiertes Phenyl substituiert ist,

R Wasserstoff, ($C_1$-$C_6$)-Alkyl, ($C_1$-$C_6$)-Alkoxy oder gegebenenfalls substituiertes Phenyl bedeutet,

R* eine ($C_1$ oder $C_2$)-Alkandiylkette bedeutet, die noch mit ein oder zwei ($C_1$-$C_4$)-Alkylresten substituiert sein kann,

$R^{31}$ Wasserstoff, ($C_1$-$C_{18}$)-Alkyl, ($C_3$-$C_{12}$)-Cycloalkyl, ($C_2$-$C_8$)-Alkenyl oder ($C_2$-$C_8$)-Alkinyl bedeutet,
wobei die vorstehenden C-haltigen Reste unsubstituiert oder ein- oder mehrfach durch gleiche oder verschiedene Reste aus der Gruppe enthaftend Halogen, Hydroxy, ($C_1$-$C_8$)-Alkoxy, ($C_1$-$C_8$)-Alkylmercapto, ($C_2$-$C_8$)-Alkenylmercapto, ($C_2$-$C_8$)-Alkinylmercapto, ($C_2$-$C_8$)-Alkenyloxy, ($C_2$-$C_8$)-Alkinyloxy, ($C_3$-$C_7$)-Cycloalkyl, ($C_3$-$C_7$)-Cycloalkoxy, Cyano, Mono- und Di-($C_1$-$C_4$-alkyl)-amino, ($C_1$-$C_8$)-Alkoxycarbonyl, ($C_2$-$C_8$)-Alkenyloxycarbonyl, ($C_1$-$C_8$)-Alkylmercaptocarbonyl, ($C_2$-$C_8$)-Alkinyloxycarbonyl, ($C_1$-$C_8$)-Alkylcarbonyl, ($C_2$-$C_8$)-Alkenylcarbonyl, ($C_2$-$C_8$)-Alkinylcarbonyl, 1-(Hydroxyimino)-($C_1$-$C_6$)-alkyl, 1-[($C_1$-$C_4$)-Alkylimino]-($C_1$-$C_4$)-alkyl, 1-[($C_1$-$C_4$)-Alkoxyimino]-($C_1$-$C_6$)-alkyl, ($C_1$-$C_8$)-Alkylcarbonylamino, ($C_2$-$C_8$)-Alkenylcarbonylamino, ($C_2$-$C_8$)-Alkinylcarbonylamino, Aminocarbonyl, ($C_1$-$C_8$)-Alkylaminocarbonyl, Di-($C_1$-$C_6$)-alkylaminocarbonyl, ($C_2$-$C_6$)-Alkenylaminocarbonyl, ($C_2$-$C_6$)-Alkinylaminocarbonyl, ($C_1$-$C_8$)-Alkoxycarbonylamino, ($C_1$-$C_8$)-Alkylaminocarbonylamino, ($C_1$-$C_6$)-Alkylcarbonyloxy, das unsubstituiert oder durch Halogen, Nitro, ($C_1$-$C_4$)-Alkoxy oder gegebenenfalls substituiertes Phenyl substituiert ist, ($C_2$-$C_6$)-Alkenylcarbonyloxy, ($C_2$-$C_6$)-Alkinylcarbonyloxy, ($C_1$-$C_8$)-Alkylsulfonyl, Phenyl, Phenyl-($C_1$-$C_6$)-alkoxy, Phenyl-($C_1$-$C_6$)-alkoxycarbonyl, Phenoxy, Phenoxy-($C_1$-$C_6$)-alkoxy, Phenoxy-($C_1$-$C_6$)-alkoxycarbonyl, Phenylcarbonyloxy, Phenylcarbonylamino, Phenyl-($C_1$-$C_6$)-alkylcarbonylamino, wobei die letztgenannten 9 Reste im Phenylring unsubstituiert oder ein- oder mehrfach durch Reste aus der Gruppe Halogen, ($C_1$-$C_4$)-Alkyl, ($C_1$-$C_4$)-Alkoxy, ($C_1$-$C_4$)-Halogenalkyl, ($C_1$-$C_4$)-Halogenalkoxy und Nitro substituiert sind, und Reste der Formeln $-SiR'_3$, $-O-SiR'_3$, $R'_3Si$-($C_1$-$C_8$)-Alkoxy, $-CO-O-NR'_2$, $-O-N=CR'_2$, $-N=CR'_2$, $-O-NR'_2$, $CH(OR')_2$ und $-O-(CH_2)_m-CH(OR')_2$, worin die R' in den genannten Formeln unabhängig voneinander Wasserstoff, ($C_1$-$C_4$)-Alkyl, Phenyl, das unsubstituiert oder ein- oder mehrfach durch Reste aus der Gruppe Halogen, ($C_1$-$C_4$)-Alkyl, ($C_1$-$C_4$)-Alkoxy, ($C_1$-$C_4$)-Halogenalkyl, ($C_1$-$C_4$)-Halogenalkoxy und Nitro substituiert ist, oder paarweise eine ($C_2$-$C_6$)-Alkandiylkette und m = 0 bis 6 bedeuten, und einen substituierten Alkoxyrest der Formel R''O-CHR'''-(OR'')-($C_1$-$C_6$)-alkoxy, worin die R'' unabhängig voneinander ($C_1$-$C_4$)-Alkyl oder zusammen einen ($C_1$-$C_6$)-Alkandiyl und R''' Wasserstoff oder ($C_1$-$C_4$)-Alkyl bedeuten, substituiert sind,

n' eine ganze Zahl von 1 bis 5,

W' ein divalenter heterocyclischer Rest einer der Formeln W1 bis W4 bedeutet,

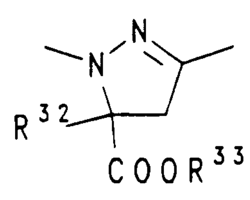

(W1)

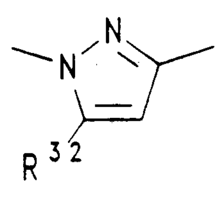

(W2)

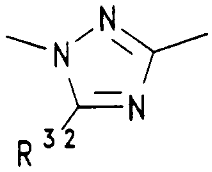

(W3)

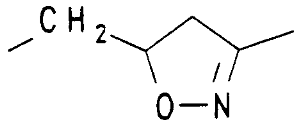

(W4)

$R^{32}$ Wasserstoff, $(C_1-C_8)$-Alkyl, $(C_1-C_8)$-Halogenalkyl, $(C_3-C_{12})$-Cycloalkyl oder gegebenenfalls substituiertes Phenyl bedeutet und

$R^{33}$ Wasserstoff, $(C_1-C_8)$-Alkyl, $(C_1-C_8)$-Halogenalkyl, $(C_1-C_4)$-Alkoxy-$(C_1-C_4)$-alkyl, $(C_1-C_6)$-Hydroxyalkyl, $(C_3-C_{12})$-Cycloalkyl oder Tri-$(C_1-C_4)$-alkyl-silyl bedeutet,

enthalten.

**2.** Mittel gemäß Anspruch 1, in welchem in Formel B1

$R^{31}$ Wasserstoff, $(C_1-C_8)$-Alkyl oder $(C_3-C_7)$-Cycloalkyl bedeutet, wobei die vorstehenden C-haltigen Reste unsubstituiert sind oder ein- oder mehrfach durch Halogen oder ein- oder zweifach, substituiert sind durch Reste aus der Gruppe Hydroxy, $(C_1-C_4)$-Alkoxy, $(C_1-C_4)$-Alkoxycarbonyl, $(C_2-C_6)$-Alkenyloxycarbonyl, $(C_2-C_6)$-Alkinyloxycarbonyl, 1-(Hydroxyimino)-$(C_1-C_4)$-alkyl, 1-[$(C_1-C_4)$-Alkylimino]-$(C_1-C_4)$-alkyl, 1-[$(C_1-C_4)$-Alkoxyimino]-$(C_1-C_4)$-alkyl und Reste der Formeln $-SiR'_3$, $-O-N=CR'_2$, $-N=CR'_2$ und $-O-NR'_2$, worin die R' in den genannten Formeln unabhängig voneinander Wasserstoff oder $(C_1-C_4)$-Alkyl oder paarweise eine $(C_4-C_5)$-Alkandiylkette bedeuten,

$R^{32}$ Wasserstoff, $(C_1-C_8)$-Alkyl, $(C_1-C_6)$-Halogenalkyl, $(C_3-C_7)$-Cycloalkyl oder Phenyl bedeutet und

$R^{33}$ Wasserstoff, $(C_1-C_8)$-Alkyl, $(C_1-C_8)$-Halogenalkyl, $(C_1-C_4$-Alkoxy)-$(C_1-C_4)$-alkyl, $(C_1-C_6)$-Hydroxyalkyl, $(C_3-C_7)$-Cycloalkyl oder Tri-$(C_1-C_4)$-alkylsilyl bedeutet.

**3.** Mittel gemäß Anspruch 1 oder 2, in welchem in Formel B1

X' Wasserstoff, Halogen, Nitro oder $(C_1-C_4)$-Halogenalkyl bedeutet,

n' 1, 2 oder 3 ist,

Z' einen Rest der Formel $OR^{31}$ bedeutet,

$R^{31}$ Wasserstoff, $(C_1-C_8)$-Alkyl oder $(C_3-C_7)$-Cycloalkyl bedeutet, wobei die vorstehenden C-haltigen Reste unsubstituiert sind oder ein- oder mehrfach, vorzugsweise bis zu dreifach durch gleiche oder verschiedene Halogen-Reste oder bis zu zweifach, durch gleiche oder verschiedene Reste aus der Gruppe Hydroxy, $(C_1-C_4)$-Alkoxy, $(C_1-C_4)$-Alkoxycarbonyl, $(C_2-C_6)$-Alkenyloxycarbonyl, $(C_2-C_6)$-Alkinyloxycarbonyl, 1-(Hydroxyimino)-$(C_1-C_4)$-alkyl, 1-[$(C_1-C_4)$-Alkylimino]-$(C_1-C_4)$-alkyl, 1-[$(C_1-C_4)$-Alkoxyimino]-$(C_1-C_4)$-alkyl und der Reste der Formeln $-SiR'_3$, $-O-N=CR'_2$, $-N=CR'_2$ und $-O-NR'_2$ substituiert sind, worin die Reste R' in den genannten Formeln unabhängig voneinander Wasserstoff oder $(C_1-C_4)$-Alkyl bedeuten oder diese paarweise für ($C_4$ oder $C_5$)-Alkandiyl stehen,

$R^{32}$ Wasserstoff, $(C_1-C_8)$-Alkyl, $(C_1-C_6)$-Halogenalkyl, $(C_3-C_7)$-Cycloalkyl oder Phenyl bedeutet und

$R^{33}$ Wasserstoff, $(C_1-C_8)$-Alkyl, $(C_1-C_8)$-Halogenalkyl, $(C_1-C_4)$-Alkoxy-$(C_1-C_4)$-alkyl, $(C_1-C_6)$-Hydroxyalkyl, $(C_3-C_7)$-Cycloalkyl oder Tri-$(C_1-C_4)$-alkylsilyl bedeutet.

**4.** Mittel gemäß einem der Ansprüche 1 bis 3, in welchem in Formel B2

X' Wasserstoff, Halogen oder $(C_1-C_4)$-Halogenalkyl bedeutet,

n' 1, 2 oder 3 ist,

Z' einen Rest der Formel $OR^{31}$ bedeutet,

R* $CH_2$ bedeutet und

$R^{31}$ Wasserstoff, $(C_1-C_8)$-Alkyl, $(C_1-C_8)$-Halogenalkyl oder $(C_1-C_4)$-Alkoxy-$(C_1-C_4)$-alkyl, 1-(Hydroxyimino)-$(C_1-C_4)$-alkyl, 1-[$(C_1-C_4)$-Alkylimino]-$(C_1-C_4)$-alkyl, 1-[$(C_1-C_4)$-Alkoxyimino]-$(C_1-C_4)$-alkyl bedeutet.

5. Mittel nach einem der Ansprüche 1 bis 4, welches mehrere herbizide Wirkstoffe der allgemeinen Formel A enthält.

6. Mittel nach einem der Ansprüche 1 bis 5, worin das Gewichtsverhältnis Safener : herbizidem Wirkstoff im Bereich von 1:10 bis 10:1 liegt.

7. Mittel nach einem der Ansprüche 1 bis 6, welches 0,1 bis 99 Gew.-% mindestens eines Wirkstoffs der Formel B1 und/oder B2 oder des Herbizid/Antidot-Wirkstoffgemischs A und B1 und/oder B2 und 1 bis 99,9 Gew.-% eines festen oder flüssigen Zusatzstoffes und 0 bis 25 Gew.-% eines Tensides enthält.

8. Verfahren zum Schutz von Kulturpflanzen vor phytotoxischen Nebenwirkungen von Herbiziden, dadurch gekennzeichnet ist, daß eine wirksame Menge mindestens eine Verbindung der in Anspruch 1 definierten Formel B1 und/oder B2 vor, nach oder gleichzeitig mit dem herbiziden Wirkstoff der im Anspruch 1 definierten Formel A auf die Pflanzen Pflanzensamen oder die Anbaufläche appliziert wird.

9. Verfahren nach Anspruch 9, dadurch gekennzeichnet, daß der Safener der Formel B1 und/oder B2 in einer Aufwandmenge von 0,001 bis 5 kg/ha Aktivsubstanz und einem Gewichtsverhältnis Safener : herbizider Wirkstoff im Bereich von 1:10 bis 10:1 appliziert wird.

10. Verfahren nach Anspruch 9, dadurch gekennzeichnet, daß die Kulturpflanzen Getreidepflanzen oder Maispflanzen sind.

11. Verwendung von Verbindungen der in einem der Ansprüche 1 bis 7 definierten Formeln B1 und B2 zum Schutz von Kulturpflanzen vor phytotoxischen Nebenwirkungen der Herbizide des Typs A) wie sie in Anspruch 1 definiert sind.

## Claims

1. A herbicidal agent which contains
A) at least one herbicidal active substance from the group of the substituted pyrimidines and triazines of the formula A

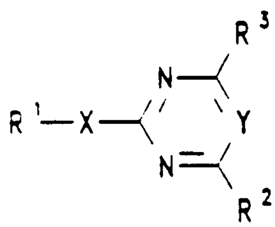

(A)

in which

| | |
|---|---|
| X | is O, S or $NR^4$, |
| Y | is N or CH, |
| $R^2$ and $R^3$ | independently of one another are hydrogen, $(C_1-C_4)$alkyl, $(C_1-C_4)$haloalkyl, $(C_1-C_4)$alkoxy, $(C_1-C_4)$haloalkoxy, $(C_1-C_4)$alkylmercapto, $(C_1-C_4)$alkylamino or di$(C_1-C_4)$alkylamino, |
| $R^1$ | is a substituted aryl or heteroaryl radical of the formula |

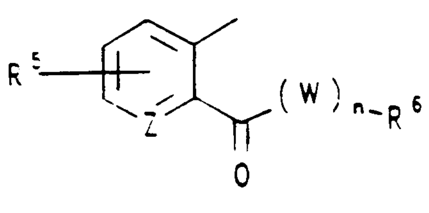

or

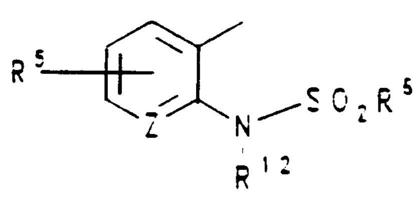

| | |
|---|---|
| n | is 0 or 1, |

W is -O-, $-NR^4-$, -S-, $-ON(R^{11})-$ or $-O-N=C(R^{11})-$,
Z is N, N→O or $CR^4$,
$R^4$ and $R^5$ independently of one another are hydrogen, halogen, cyano, $(C_1-C_4)$alkyl, $(C_2-C_4)$-alkenyl, $(C_2-C_4)$alkynyl, $(C_1-C_4)$-alkoxy, $(C_2-C_4)$alkenyloxy, $(C_2-C_4)$alkynyloxy, benzyloxy, 4,6-di[$(C_1-C_4)$alkoxy]-pyrimidin-2-yloxy, $(C_1-C_4)$alkylthio, $(C_2-C_4)$-alkenylthio, $(C_2-C_4)$alkynylthio, benzylthio, $(C_1-C_4)$alkylamino, di[$(C_1-C_4)$-alkyl]-amino, $(C_1-C_4)$haloalkyl or $(C_1-C_4)$-haloalkoxy,
$R^6$ is hydrogen, $(C_1-C_4)$alkyl, $(C_2-C_4)$alkenyl, $(C_2-C_4)$alkynyl, alkali metal or 1 equivalent alkaline earth metal, alkylammonium, aryl, $CF_3$ or $(CHR^{13})_{m'}CHR^7R^8$ where m' is 0 or 1,
$R^7$ and $R^{13}$ independently of one another are hydrogen, $(C_1-C_4)$alkyl or $(C_1-C_4)$alkoxy,
$R^8$ is $(C_1-C_4)$alkoxycarbonyl, cyano, halogen, acetyl, pivaloyl, benzoyl, $(C_1-C_4)$alkoxy, aryloxy, haloacetoxy, methanesulfonyloxy, hydroxyl, $(C_1-C_4)$alkylmercapto, $(C_1-C_4)$alkylsulfonyl, arylmercapto, di$(C_1-C_4)$alkylamino, pyridyl, aryl or $CONR^9R^{10}$,
$R^9$ and $R^{10}$ independently of one another are hydrogen, $(C_1-C_4)$alkyl, $(C_2-C_4)$alkenyl, aryl or benzyl,
$R^{11}$ is hydrogen or $(C_1-C_4)$ alkyl or
$R^6$ and $R^{11}$ together are methylene, ethanediyl or propanediyl,
$R^{12}$ is hydrogen, alkyl or alkoxy and
aryl is phenyl or naphthyl, each of which is unsubstituted or mono- or disubstituted by radicals selected from the group comprising halogen, $(C_1-C_4)$alkyl, $(C_1-C_4)$alkoxy, phenoxy, nitro and $(C_1-C_4)$alkoxycarbonyl,

or

$R^1$ is a radical of the formula

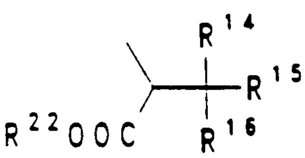

or

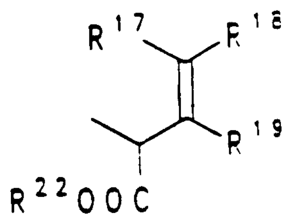

$R^{14}$ is hydrogen, halogen, halo$(C_1-C_4)$alkyl, $(C_1-C_4)$alkyl, cycloalkyl, $(C_1-C_4)$alkylmercapto$(C_1-C_4)$alkyl, hydroxy$(C_1-C_4)$alkyl, hydroxyl, cyano, aryloxy$(C_1-C_4)$alkyl, thienyl, aryl, dihydronaphthyl or

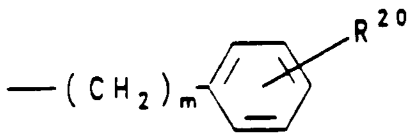

where aryl is as defined above,
$R^{20}$ is hydrogen, halogen, nitro, $(C_1-C_4)$alkyl, $(C_1-C_4)$alkoxy or $S(O)_pR^{21}$,
$R^{21}$ is alkyl,
p is 0, 1 or 2,
m is 0, 1 or 2,
$R^{15}$ and $R^{16}$ independently of one another are hydrogen or alkyl, or together with the carbon atom form a 3-, 4-, 5- or 6-membered cycloalkane ring in which a methylene group can be replaced by oxygen and which can be substituted by one or two alkyl groups,
$R^{17}$ and $R^{18}$ independently of one another are hydrogen or $(C_1-C_4)$alkyl,
$R^{19}$ is $(C_1-C_4)$alkyl or phenyl, or
$R^{18}$ and $R^{19}$ are $-(CH_2)l-$ where l is 3 or 4 and which can be substituted by one or two alkyl groups,
$R^{22}$ is hydrogen, $(C_1-C_4)$alkyl, $(C_1-C_4)$alkenyl, $(C_1-C_4)$alkynyl, phenyl, $(C_1-C_4)$-

alkylideneamino, $(C_1-C_4)$alkoxycarbonyl$(C_1-C_4)$alkyl, $(C_1-C_4)$alkoxy$(C_1-C_4)$-alkyl,halo$(C_1-C_4)$alkyl, cycloalkyl,
nitro-substituted phenylmercapto-$(C_1-C_4)$alkyl, halogen or benzyl which can be substituted by $(C_1-C_4)$alkyl or $(C_1-C_4)$alkoxy, or

a salt thereof,
and
B) at least one compound from the group of the compounds of the formulae B1 and B2

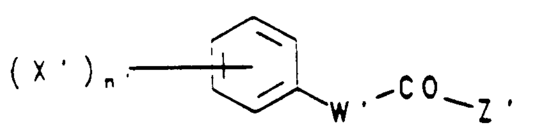

(B1)

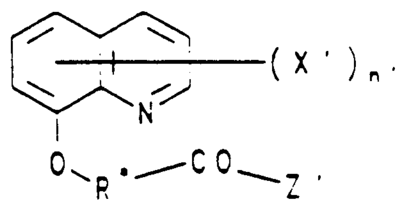

(B2)

in which

- X' is hydrogen, halogen, $(C_1-C_4)$alkyl, $(C_1-C_4)$alkoxy, nitro or $(C_1-C_4)$haloalkyl,
- Z' is $OR^{31}$, $SR^{31}$ or $ND^{31}R$, or forms a saturated or unsaturated 3- to 7-membered heterocycle which has at least one nitrogen atom and up to 3 hetero atoms, which is linked to the carbonyl group via the nitrogen atom and which is unsubstituted or substituted by radicals selected from the group comprising $(C_1-C_4)$alkyl, $(C_1-C_4)$-alkoxy or optionally substituted phenyl,
- R is hydrogen, $(C_1-C_6)$alkyl, $(C_1-C_6)$alkoxy or optionally substituted phenyl,
- R* is a ($C_1$ or $C_2$)alkanediyl chain which can additionally be substituted by one or two $(C_1-C_4)$alkyl radicals,
- $R^{31}$ is hydrogen, $(C_1-C_{18})$alkyl, $(C_3-C_{12})$cycloalkyl, $(C_2-C_8)$alkenyl or $(C_2-C_8)$alkynyl, where the above carbon-containing radicals are unsubstituted or mono- or polysubstituted by identical or different radicals selected from the group comprising halogen, hydroxyl, $(C_1-C_8)$-alkoxy, $(C_1-C_8)$alkylmercapto, $(C_2-C_8)$alkenylmercapto, $(C_2-C_8)$alkynylmercapto, $(C_2C_8)$-alkenyloxy, $(C_2-C_8)$alkynyloxy, $(C_3-C_7)$cycloalkyl, $(C_3-C_7)$cycloalkoxy, cyano, mono- and di$(C_1-C_4$alkyl)amino, $(C_1-C_8)$alkoxycarbonyl, $(C_2-C_8)$alkenyloxycarbonyl, $(C_1-C_8)$-alkylmercaptocarbonyl, $(C_2-C_8)$alkynyloxycarbonyl, $(C_1-C_8)$alkylcarbonyl, $(C_2-C_8)$-alkenylcarbonyl, $(C_2-C_8)$alkynylcarbonyl, 1-(hydroxyimino)-$(C_1-C_6)$alkyl, 1-[$(C_1-C_4)$-alkylimino]$(C_1-C_4)$alkyl,1-[$(C_1-C_4)$alkoxyimino]$(C_1-C_6)$alkyl, $(C_1-C_8)$alkylcarbonylamino, $(C_2-C_8)$alkenylcarbonylamino, $(C_2-C_8)$alkynylcarbonylamino, aminocarbonyl, $(C_1-C_8)$-alkylaminocarbonyl, di$(C_1-C_6)$alkylaminocarbonyl, $(C_2-C_6)$alkenylaminocarbonyl, $(C_2-C_6)$-alkynylaminocarbonyl, $(C_1-C_8)$alkoxycarbonylamino, $(C_1-C_8)$alkylaminocarbonylamino, $(C_1-C_6)$alkylcarbonyloxy which is unsubstituted or substituted by halogen, nitro, $(C_1-C_4)$-alkoxy or optionally substituted phenyl, or $(C_2-C_6)$alkenylcarbonyloxy, $(C_2-C_6)$-alkynylcarbonyloxy, $(C_1-C_8)$alkylsulfonyl, phenyl, phenyl$(C_1-C_6)$alkoxy, phenyl$(C_1-C_6)$-alkoxycarbonyl, phenoxy, phenoxy$(C_1-C_6)$alkoxy, phenoxy $(C_1-C_6)$ alkoxycarbonyl, phenylcarbonyloxy, phenylcarbonylamino, phenyl$(C_1-C_6)$alkylcarbonylamino, the last 9 radicals mentioned being unsubstituted in the phenyl ring or mono- or polysubstituted by radicals selected from the group comprising halogen, $(C_1-C_4)$alkyl, $(C_1-C_4)$alkoxy, $(C_1-C_4)$haloalkyl, $(C_1-C_4)$haloalkoxy and nitro, and radicals of the formulae $-SiR'_3$, $-O-SiR'_3$, $R'_3Si(C_1-C_8)$-alkoxy, $-CO-O-NR'_2$, $-O-N=CR'_2$, $-N=CR'_2$, $-O-NR'_2$, $-CH(OR')_2$ and $-O-(CH_2)_m-CH(OR')_2$, in which the R' radicals in said formulae independently of one another are hydrogen, $(C_1-C_4)$alkyl, phenyl which is unsubstituted or mono- or polysubstituted by radicals selected from the group comprising halogen, $(C_1-C_4)$alkyl, $(C_1-C_4)$alkoxy, $(C_1-C_4)$haloalkyl, $(C_1-C_4)$-haloalkoxy and nitro, or two of these radicals together are a $(C_2-C_6)$alkanediyl chain, and m = 0 to 6, and a substituted alkoxy radical of the formula $R''O-CHR'''(OR'')(C_1-C_6)$-alkoxy in which the R'' radicals independently of one another are $(C_1-C_4)$alkyl or together are a $(C_1-C_6)$alkanediyl, and R''' is hydrogen or $(C_1-C_4)$alkyl,
- n' is an integer from 1 to 5,

W' is a divalent heterocyclic radical of one of the formulae W1 to W4,

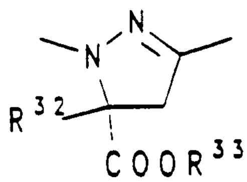

(W1)

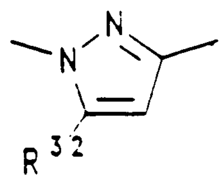

(W2)

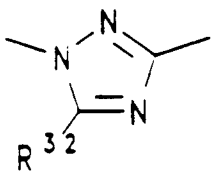

(W3)

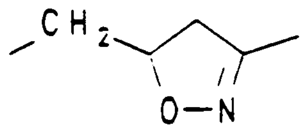

(W4)

$R^{32}$ is hydrogen, $(C_1-C_8)$alkyl, $(C_1-C_8)$haloalkyl, $(C_3-C_{12})$cycloalkyl or optionally substituted phenyl and

$R^{33}$ is hydrogen, $(C_1-C_8)$alkyl, $(C_1-C_8)$haloalkyl, $(C_1-C_4)$alkoxy$(C_1-C_4)$alkyl, $(C_1-C_6)$-hydroxyalkyl, $(C_3-C_{12})$cycloalkyl or tri$(C_1-C_4)$alkylsilyl.

**2.** An agent as claimed in claim 1, in which, in formula B1,

$R^{31}$ is hydrogen, $(C_1-C_8)$alkyl or $(C_3-C_7)$cycloalkyl, where the above carbon-containing radicals are unsubstituted or mono- or polysubstituted by halogen or mono- or disubstituted by radicals selected from the group comprising hydroxyl, $(C_1-C_4)$alkoxy, $(C_1-C_4)$alkoxycarbonyl, $(C_2-C_6)$alkenyloxycarbonyl, $(C_2-C_6)$alkynyloxycarbonyl, 1-(hydroxyimino)$(C_1-C_4)$alkyl, 1-[$(C_1-C_4)$alkylimino]$(C_1-C_4)$alkyl, 1-[$(C_1-C_4)$alkoxyimino]$(C_1-C_4)$alkyl and radicals of the formulae $-SiR'_3$, $-O-N=CR'_2$, $-N=CR'_2$ and $-O-NR'_2$, in which the R' radicals in said formulae independently of one another are hydrogen or $(C_1-C_4)$alkyl, or two of these radicals together are a $(C_4-C_5)$alkanediyl chain,

$R^{32}$ is hydrogen, $(C_1-C_8)$alkyl, $(C_1-C_6)$haloalkyl, $(C_3-C_7)$cycloalkyl or phenyl and

$R^{33}$ is hydrogen, $(C_1-C_8)$alkyl, $(C_1-C_8)$haloalkyl, $(C_1-C_4)$alkoxy$(C_1-C_4)$alkyl, $(C_1-C_6)$hydroxyalkyl, $(C_3-C_7)$cycloalkyl or tri$(C_1-C_4)$alkylsilyl.

**3.** An agent as claimed in claim 1 or 2, in which, in formula B1,

X' is hydrogen, halogen, nitro or $(C_1-C_4)$haloalkyl,

n' is 1, 2 or 3,

Z' is a radical of the formula $OR^{31}$,

$R^{31}$ is hydrogen, $(C_1-C_8)$alkyl or $(C_3-C_7)$cycloalkyl, where the above carbon-containing radicals are unsubstituted or mono- or polysubstituted, preferably up to trisubstituted, by identical or different halogen radicals or up to disubstituted by identical or different radicals selected from the group comprising hydroxyl, $(C_1-C_4)$alkoxy, $(C_1-C_4)$alkoxycarbonyl, $(C_2-C_6)$-alkenyloxycarbonyl, $(C_2-C_6)$alkynyloxycarbonyl, 1-(hydroxyimino) $(C_1-C_4)$alkyl, 1-[$(C_1-C_4)$-alkylimino] $(C_1-C_4)$alkyl, 1-[$(C_1-C_4)$alkoxyimino]$(C_1-C_4)$alkyl and the radicals of the formulae $-SiR'_3$, $-O-N = CR'_2$, $-N=CR'_2$ and $-O-NR'_2$, in which the radicals R' in said formulae independently of one another are hydrogen or $(C_1-C_4)$alkyl, or two of these radicals together are ($C_4$ or $C_5$)alkanediyl,

$R^{32}$ is hydrogen, $(C_1-C_8)$alkyl, $(C_1-C_6)$haloalkyl, $(C_3-C_7)$cycloalkyl or phenyl and

$R^{33}$ is hydrogen, $(C_1-C_8)$alkyl, $(C_1-C_8)$haloalkyl, $(C_1-C_4)$alkoxy$(C_1-C_4)$alkyl, $(C_1-C_6)$hydroxyalkyl, $(C_3-C_7)$cycloalkyl or tri$(C_1-C_4)$alkylsilyl.

**4.** An agent as claimed in one of claims 1 to 3, in which, in formula B2,

| | |
|---|---|
| X' | is hydrogen, halogen or $(C_1-C_4)$haloalkyl, |
| n' | is 1, 2 or 3, |
| Z' | is a radical of the formula $OR^{31}$, |
| R* | is $CH_2$ and |
| $R^{31}$ | is hydrogen, $(C_1-C_8)$alkyl, $(C_1-C_8)$haloalkyl or $(C_1-C_4)$alkoxy$(C_1-C_4)$alkyl, 1-(hydroxyimino)-$(C_1-C_4)$alkyl, 1-[$(C_1-C_4)$alkylimino]$(C_1-C_4)$alkyl, 1-[$(C_1-C_4)$alkoxyimino]-$(C_1-C_4)$alkyl. |

**5.** An agent as claimed in one of claims 1 to 4, which comprises a plurality of herbicidal active substances of the formula A.

**6.** An agent as claimed in one of claims 1 to 5, in which the ratio by weight of safener:herbicidal active substance is in the range of from 1:10 to 10:1.

**7.** An agent as claimed in one of claims 1 to 6, which comprises 0.1 to 99 % by weight of at least one active substance of the formula B1 and/or B2 or of the herbicide/antidote active substance mixture A and B1 and/or B2, and 1 to 99.9 % by weight of a solid or liquid additive, and 0 to 25 % by weight of a surfactant.

**8.** A method of protecting crop plants against phytotoxic secondary effects of herbicides, which comprises applying an effective amount of at least one compound of the formula B1 and/or B2 as defined in claim 1 before, after or together with the herbicidal active substance, of the formula A as defined in claim 1, to the plants, seeds of plants or the area under cultivation.

**9.** The method as claimed in claim 8, wherein the safener of the formula B1 and/or B2 is applied at an application rate of from 0.001 to 5 kg/ha of active ingredient and a ratio by weight of safener:herbicidal active substance in the range of from 1:10 to 10:1.

**10.** The method as claimed in claim 9, wherein the crop plants are cereal plants or corn plants.

**11.** The use of a compound of the formula B1 or B2 as defined in one of claims 1 to 7 for protecting crop plants against phytotoxic secondary effects of the herbicides of type A), as they are defined in claim 1.

**Revendications**

**1.** Agent herbicide, qui contient

A) au moins une matière active herbicide prise dans le groupe des triazines et pyrimidines substituées de formule A,

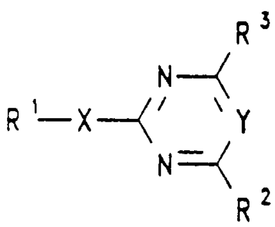

(A)

dans laquelle

| | |
|---|---|
| X | représente O, S ou $NR^4$, |
| Y | représente N ou CH, |
| $R^2$ et $R^3$ | représentent, indépendamment l'un de l'autre, hydrogène, alkyle en $(C_1-C_4)$, halogénoalkyle en $(C_1-C_4)$, alcoxy en $(C_1-C_4)$, halogénoalcoxy en $(C_1-C_4)$, (alkyl en $C_1-C_4$)mercapto, (alkyl en $C_1-C_4$)amino ou di-(alkyl en $C_1-C_4$)-amino, |
| $R^1$ | représente un radical aryle ou hétéroaryle substitué de formule |

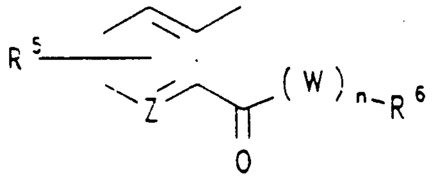

ou

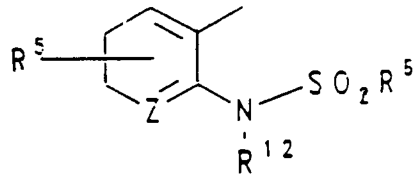

| | |
|---|---|
| n | vaut 0 ou 1, |
| W | représente -O-, $-NR^4-$, -S-, $-ON(R^{11})-$ ou $-O-N=C(R^{11})-$, |
| Z | représente N, N→O ou $CR^4$, |
| $R^4$, $R^5$ | représentent, indépendamment l'un de l'autre, hydrogène, halogène, cyano, alkyle en ($C_1$-$C_4$), alcényle en ($C_2$-$C_4$), alcynyle en ($C_2$-$C_4$), alcoxy en ($C_1$-$C_4$), (alcényl en $C_2$-$C_4$)oxy, (alcynyl en $C_2$-$C_4$)oxy, benzyloxy, 4,6-di-[alcoxy en ($C_1$-$C_4$)]-pyrimidin-2-yloxy, (alkyl en $C_1$-$C_4$)thio, (alcényl en $C_2$-$C_4$)thio, (alcynyl en $C_2$-$C_4$)thio, benzylthio, (alkyl en $C_1$-$C_4$)-amino, di-[alkyl en ($C_1$-$C_4$)]-amino, halogénoalkyle en ($C_1$-$C_4$) ou halogénoalcoxy en ($C_1$-$C_4$), |
| $R^6$ | représente hydrogène, alkyle en ($C_1$-$C_4$), alcényle en ($C_2$-$C_4$), alcynyle en ($C_2$-$C_4$), métal alcalin ou 1 équivalent de métal alcalino-terreux, alkylammonium, aryle, $CF_3$ ou $(CHR^{13})_{m'}CHR^7R^8$ avec m' = 0 ou 1, |
| $R^7$ et $R^{13}$ | représentent, indépendamment l'un de l'autre, hydrogène, alkyle en ($C_1$-$C_4$) ou alcoxy en ($C_1$-$C_4$), |
| $R^8$ | représente (alcoxy en $C_1$-$C_4$)carbonyle, cyano, halogène, acétyle, pivaloyle, benzoyle, alcoxy en ($C_1$-$C_4$), aryloxy, halogénoacétoxy, méthanesulfonyloxy, hydroxy, (alkyle en $C_1$-$C_4$)-mercapto, (alkyle en $C_1$-$C_4$)-sulfonyle, arylmercapto, di-(alkyle en $C_1$-$C_4$)amino, pyridyle, aryle ou $CONR^9R^{10}$, |
| $R^9$ et $R^{10}$ | représentent, indépendamment l'un de l'autre, hydrogène, alkyle en ($C_1$-$C_4$), alcényle en ($C_2$-$C_4$), aryle ou benzyle, |
| $R^{11}$ | représente hydrogène ou alkyle en ($C_1$-$C_4$) ou |
| $R^6$ et $R^{11}$ | ensemble représentent méthylène, éthanediyle ou propanediyle, |
| $R^{12}$ | représente hydrogène, alkyle ou alcoxy et |
| Aryle | représente phényle ou naphtyle, qui est chaque fois non substitué ou substitué une ou deux fois par des radicaux pris dans le groupe comprenant halogène, alkyle en ($C_1$-$C_4$), alcoxy en ($C_1$-$C_4$), phénoxy, nitro et (alcoxy en $C_1$-$C_4$)carbonyle, |

ou

$R^1$ représente un radical de formule

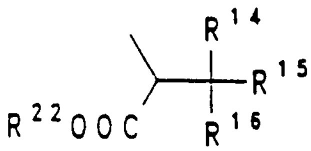

ou

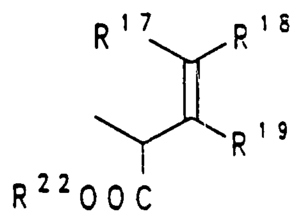

$R^{14}$ représente hydrogène, halogène, halogénoalkyle en ($C_1$-$C_4$), alkyle en ($C_1$-$C_4$), cycloalkyle, (alkyl en $C_1$-$C_4$)-mercapto (alkyle en $C_1$-$C_4$), hydroxyalkyle en ($C_1$-$C_4$), hydroxy, cyano, aryloxyalkyle en ($C_1$-$C_4$), thiényle, aryle, dihydronaphtyle ou

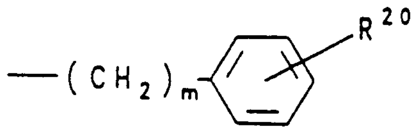

aryle étant défini comme ci-dessus,

$R^{20}$ représente hydrogène, halogène, nitro, alkyle en ($C_1$-$C_4$), alcoxy en ($C_1$-$C_4$) ou S-

$(O)_pR^{21}$,

$R^{21}$ représente alkyle,

p vaut 0, 1 ou 2,

m vaut 0, 1 ou 2,

$R^{15}$ et $R^{16}$ représentent, indépendamment l'un de l'autre, hydrogène ou alkyle ou, ensemble avec l'atome de carbone, représentent un cycle cycloalcane à 3, 4, 5 ou 6 chaînons, dans lequel un groupe méthylène peut être remplacé par l'oxygène et qui peut être substitué par un ou deux groupes alkyle,

$R^{17}$ et $R^{18}$ représentent, indépendamment l'un de l'autre, hydrogène ou alkyle en $(C_1-C_4)$,

$R^{19}$ représente alkyle en $(C_1-C_4)$ ou phényle ou

$R^{18}$ et $R^{19}$ représentent $-(CH_2)_l-$ avec l = 3 ou 4, qui peut être substitué par un ou deux groupes alkyle,

$R^{22}$ représente hydrogène, alkyle en $(C_1-C_4)$, alcényle en $(C_1-C_4)$, alcynyle en $(C_1-C_4)$, phényle, (alkylydène en $C_1-C_4$)amino, (alcoxy en $C_1-C_4$)carbonyl-(alkyle en $C_1-C_4$), (alcoxy en $C_1-C_4$)-(alkyle en $C_1-C_4$), halogénoalkyle en $(C_1-C_4)$, cycloalkyle, phénylmercaptoalkyle en $(C_1-C_4)$ nitro-substitué, halogène ou benzyle, qui peut être substitué par alkyle en $(C_1-C_4)$ ou alcoxy en $(C_1-C_4)$ ou

leurs sel

et

B) au moins un composé pris dans le groupe comprenant les composés de formules $B_1$ et $B_2$

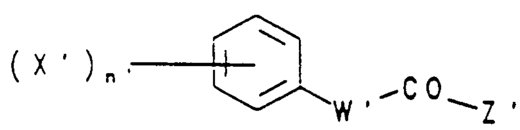

(B1)

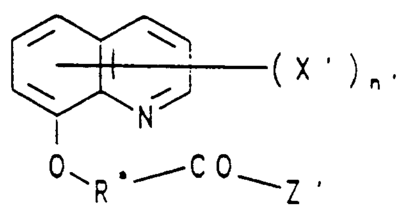

(B2)

dans lesquelles

X' représente hydrogène, halogène, alkyle en $(C_1-C_4)$, alcoxy en $(C_1-C_4)$, nitro ou halogénoalkyle en $(C_1-C_4)$,

Z' représente $OR^{31}$, $SR^{31}$ ou $NR^{31}R$, ou un hétérocycle saturé ou insaturé avec de 3 à 7 chaînons avec au moins un atome de N et avec jusqu'à 3 hétéroatomes, qui est lié par l'intermédiaire de l'atome de N au groupe carbonyle et est non substitué ou substitué par des radicaux pris dans le groupe comprenant alkyle en $(C_1-C_4)$, alcoxy en $(C_1-C_4)$ ou éventuellement phényle substitué,

R représente hydrogène, alkyle en $(C_1-C_6)$, alcoxy en $(C_1-C_6)$ ou éventuellement phényle substitué,

R* représente une chaîne (alcane en $C_1$ ou $C_2$)diyle, qui peut être encore substituée par un ou deux radicaux alkyle en $(C_1-C_4)$,

$R^{31}$ représente hydrogène, alkyle en $(C_1-C_{18})$,cycloalkyle en $(C_3-C_{12})$, alcényle en $(C_2-C_8)$ ou alcynyle en $(C_2-C_8)$,

les radicaux carbonés précités pouvant être non substitués ou substitués une ou plusieurs fois par des radicaux identiques ou différents pris dans le groupe comprenant halogène, hydroxy, alcoxy en $(C_1-C_8)$, (alkyl en $C_1-C_8$)-mercapto, (alcényl en $C_2-C_8$)-mercapto, (alcynyl en $C_2-C_8$)-mercapto, (alcényl en $C_2-C_8$)oxy, (alcynyl en $C_2-C_8$) oxy, cycloalxyle en $(C_3-C_7)$, cycloalcoxy en $(C_3-C_7)$, cyano, mono- et di-(alkyle en $C_1-C_4$) -amino, (alcoxy en $C_1-C_8$)-carbonyle, (alcényl en $C_2-C_8$)-oxycarbonyle, (alkyl en $C_1-C_8$)-mercaptocarbonyle, (alcynyl en $C_2-C_8$)-oxycarbonyle, (alkyl en $C_1-C_8$)-carbonyle, (alcényl en $C_2-C_8$)-carbonyle, (alcynyl en $C_2-C_8$)-carbonyle, 1-(hydroxyimino)-(alkyle en $C_1-C_6$), 1-[alkyl en $(C_1-C_4)$-imino]-(alkyle en $C_1-C_4$), 1-[alcoxy en $(C_1-C_4)$-imino]-(alkyle en $C_1-C_6$), (alkyle en $C_1-C_8$)-carbonylamino, (alcényl en $C_2-C_8$)-carbonylamino, (alcynyle en $C_2-C_8$)-carbonylamino, aminocarbonyle, (alkyle en $C_1-C_8$)-aminocarbonyle, di-(alkyl en $C_1-C_6$)-aminocarbo-

nyle, (alcényl en $C_2$-$C_6$)-aminocarbonyle, (alcynyl en $C_2$-$C_6$)-aminocarbonyle, (alcoxy en $C_1$-$C_8$)-carbonylamino, (alkyl en $C_1$-$C_8$)-aminocarbonylamino, (alkyl en $C_1$-$C_6$)-carbonyloxy, qui est non substitué ou substitué par halogène, nitro, alcoxy en ($C_1$-$C_4$) ou phényle éventuellement substitué, représente aussi (alcényl en $C_2$-$C_6$)-carbonyloxy, (alcynyl en $C_2$-$C_6$)-carbonyloxy, (alkyl en $C_1$-$C_8$)-sulfonyle, phényle, phénylalcoxy en ($C_1$-$C_6$), phényl(alcoxy en $C_1$-$C_6$)-carbonyle, phénoxy, phénoxyalcoxy en ($C_1$-$C_6$), phénoxy(alcoxy en $C_1$-$C_6$)-carbonyle, phénylcarbonyloxy, phénylcarbonylamino, phényl-(alkyl en $C_1$-$C_6$)-carbonylamino, les neuf derniers radicaux pouvant être non substitués sur le cycle de phényle ou substitués une ou plusieurs fois par des radicaux pris dans le groupe comprenant halogène, alkyle en ($C_1$-$C_4$), alcoxy en ($C_1$-$C_4$), halogénoalkyle en ($C_1$-$C_4$), halogénoalcoxy en ($C_1$-$C_4$) et nitro, et des radicaux de formules $-SiR'_3$, $-O-SiR'_3$, $R'_3Si$-(alcoxy en $C_1$-$C_8$), $-CO-O-NR'_2$, $-O-N=CR'_2$, $-N=CR'_2$, $-O-NR'_2$, $-CH(OR')_2$ et $-O-(CH_2)_m-CH(OR')_2$, où les radicaux R' dans les formules citées, indépendamment l'un de l'autre, représentent hydrogène, alkyle en ($C_1$-$C_4$), phényle qui est non substitué ou substitué une ou plusieurs fois par des radicaux pris dans le groupe comprenant halogène, alkyle en ($C_1$-$C_4$), alcoxy en ($C_1$-$C_4$), halogénoalkyle en ($C_1$-$C_4$), halogénoalcoxy en ($C_1$-$C_4$) et nitro, ou par paires, représentent une chaîne (alcane en $C_2$-$C_6$)-diyle et m = 0 à 6, et un radical alcoxy substitué de formule R''O-CHR'''(OR'')-(alcoxy en $C_1$-$C_6$), dans laquelle les radicaux R'', indépendamment l'un de l'autre, représentent alkyle en ($C_1$-$C_4$) ou ensemble un (alcane en $C_1$-$C_6$)-diyle et R''' représente hydrogène ou alkyle en ($C_1$-$C_4$),

n' est un nombre entier de 1 à 5,

W' représente un radical hétérocyclique bivalent de l'une des formules W1 à W4,

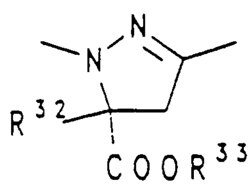

(W1)

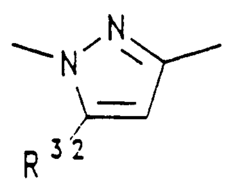

(W2)

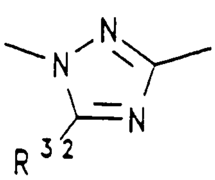

(W3)

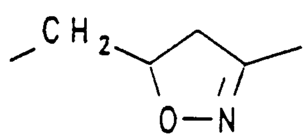

(W4)

$R^{32}$ représente hydrogène, alkyle en ($C_1$-$C_8$),halogénoalkyle en ($C_1$-$C_8$), cycloalkyle en ($C_3$-$C_{12}$) ou phényle éventuellement substitué et

$R^{33}$ représente hydrogène, alkyle en ($C_1$-$C_8$),halogénoalkyle en ($C_1$-$C_8$), (alcoxy en $C_1$-$C_4$)-(alkyle en $C_1$-$C_4$), hydroxyalkyle en ($C_1$-$C_6$), cycloalkyle en ($C_3$-$C_{12}$) ou tri-(alkyl en $C_1$-$C_4$)-silyle.

**2.** Agent selon la revendication 1, dans lequel dans la formule B1

$R^{31}$ représente hydrogène, alkyle en ($C_1$-$C_8$) ou cycloalkyle en ($C_3$-$C_7$), les radicaux carbonés précités étant non substitués ou substitués une ou plusieurs fois par halogène ou une ou deux fois par des radicaux pris dans le groupe comprenant hydroxy, alcoxy en ($C_1$-$C_4$), (alcoxy en $C_1$-$C_4$)-carbonyle, (alcényl en $C_2$-$C_6$)-oxycarbonyle, (alcynyl en $C_2$-$C_6$)-oxycarbonyle, 1-(hydroxyimino)-(alkyle en $C_1$-$C_4$), 1-[alkyl en ($C_1$-$C_4$)-imino]-(alkyle en $C_1$-$C_4$), 1-[alcoxy en ($C_1$-$C_4$)-imino]-(alkyle en $C_1$-$C_4$) et des radicaux de formules $-SiR'_3$,$-O-N=CR'_2$,

$-N=CR'_2$ et $-O-NR'_2$, où les radicaux R' dans les formules citées, indépendamment l'un de l'autre, représentent hydrogène ou alkyle en ($C_1$-$C_4$) ou par paires, une chaîne (alcane en $C_4$-$C_5$)-diyle,

$R^{32}$ représente hydrogène, alkyle en ($C_1$-$C_8$),halogénoalkyle en ($C_1$-$C_6$), cycloalkyle en ($C_3$-$C_7$) ou phényle et

$R^{33}$ représente hydrogène, alkyle en ($C_1$-$C_8$),halogénoalkyle en ($C_1$-$C_8$), (alcoxy en $C_1$-$C_4$)-(alkyle en $C_1$-$C_4$), hydroxyalkyle en ($C_1$-$C_6$), cycloalkyle en ($C_3$-$C_7$) ou tri-(alkyl en $C_1$-$C_4$)-silyle,

**3.** Agent selon la revendication 1 ou 2,
dans lequel dans la formule B1

X' représente hydrogène, halogène, nitro ou halogénoalkyle en ($C_1$-$C_4$),

n' vaut 1, 2 ou 3,

Z' représente un radical de formule $OR^{31}$,

$R^{31}$ représente hydrogène, alkyle en ($C_1$-$C_8$) ou cycloalkyle en ($C_3$-$C_7$), les radicaux carbonés précités étant non substitués ou substitués une ou plusieurs fois, de préférence jusqu'à trois fois, par des radicaux halogéne identiques ou différents ou jusqu'à deux fois par des radicaux identiques ou différents pris dans le groupe comprenant hydroxy, alcoxy en ($C_1$-$C_4$), (alcoxy en $C_1$-$C_4$)-carbonyle, (alcényl en $C_2$-$C_6$)-oxycarbonyle, (alcynyl en $C_2$-$C_6$)-oxycarbonyle, 1-(hydroxyimino)-(alkyle en $C_1$-$C_4$), 1-[alkyl en ($C_1$-$C_4$)-imino]-(alkyle en $C_1$-$C_4$), 1-[alcoxy en ($C_1$-$C_4$)-imino]-(alkyle en $C_1$-$C_4$) et des radicaux de formules $-SiR'_3$, $-O-N=CR'_2$ , $-N=CR'_2$ et $-O-NR'_2$, où les radicaux R' dans les formules précitées, indépendamment l'un de l'autre, représentent hydrogène ou alkyle en ($C_1$-$C_4$) ou par paires, un (alcane en $C_4$ ou $C_5$)-diyle,

$R^{32}$ représente hydrogène, alkyle en ($C_1$-$C_8$),halogénoalkyle en ($C_1$-$C_6$), cycloalkyle en ($C_3$-$C_7$) ou phényle et

$R^{33}$ représente hydrogène, alkyle en ($C_1$-$C_8$),halogénoalkyle en ($C_1$-$C_8$), (alcoxy en $C_1$-$C_4$)-(alkyle en $C_1$-$C_4$), hydroxyalkyle en ($C_1$-$C_6$), cycloalkyle en ($C_3$-$C_7$) ou tri-(alkyle en $C_1$-$C_4$)-silyle.

**4.** Agent selon l'une des revendications 1 à 3,
dans lequel dans la formule B2,

X' représente hydrogène, halogène ou halogénoalkyle en ($C_1$-$C_4$),

n' vaut 1, 2 ou 3,

Z' représente un radical de formule $OR^{31}$,

R* représente $CH_2$ et

$R^{31}$ représente hydrogène, alkyle en ($C_1$-$C_8$), halogénoalkyle en ($C_1$-$C_8$) ou (alcoxy en $C_1$-$C_4$)-(alkyle en $C_1$-$C_4$), 1-(hydroxyimino)-alkyle en ($C_1$-$C_4$), 1-[alkyl en ($C_1$-$C_4$)-imino]-alkyle en ($C_1$-$C_4$), 1-[alcoxy en ($C_1$-$C_4$)-imino]-alkyle en ($C_1$-$C_4$).

**5.** Agent selon l'une des revendications 1 à 4, qui contient plusieurs matières actives herbicides de formule générale A.

**6.** Agent selon l'une des revendications 1 à 5 où le rapport pondéral du phytoprotecteur : agent herbicide est compris entre 1:10 et 10:1.

**7.** Agent selon l'une des revendications 1 à 6, qui contient de 0,1 à 99% en poids d'au moins une matière active de formule B1 et/ou B2 ou d'herbidicide/mélange antidote-matière active A et B1 et/ou B2 et de 1 à 99,9% en poids d'un additif solide ou liquide et de 0 à 25% en poids d'un agent tensio-actif.

**8.** Procédé pour la protection des plantes cultivées contre les effets secondaires phytotoxiques des herbicides, caractérisé en ce qu'on applique une quantité efficace d'au moins un composé de formule B1 et/ou B2 définie dans la revendication 1, après ou simultanément avec l'agent herbicide de formule A définie dans la revendication 1, sur les plantes, les grains des plantes ou la surface ensemencée.

**9.** Procédé selon la revendication 8, caractérisé en ce qu'on applique le phytoprotecteur de formule B1 et/ou B2 en une dose de 0,001 à 5 kg/ha de substance active et dans un rapport pondéral du phytoprotecteur : matière active herbicide compris dans le domaine de 1:10 à 10:1.

10. Procédé selon la revendication 9, caractérisé en ce que les plantes cultivées sont les plantes de céréales ou les plantes de maïs.

11. Utilisation des composés des formules B1 et B2 définies dans l'une des revendications 1 à 7 pour la protection des plantes cultivées contre les effets phytotoxiques des herbicides du type A) comme ils sont définis dans la revendication 1.